(19) Europäisches Patentamt
European Patent Office
Office européen des brevets

(11) EP 1 341 007 A1

(12) **EUROPEAN PATENT APPLICATION**
published in accordance with Art. 158(3) EPC

(43) Date of publication:
**03.09.2003 Bulletin 2003/36**

(21) Application number: **01999840.0**

(22) Date of filing: **04.12.2001**

(51) Int Cl.[7]: **G02B 5/30**

(86) International application number:
**PCT/JP01/10585**

(87) International publication number:
**WO 02/046808 (13.06.2002 Gazette 2002/24)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.12.2000 JP 2000369003**
**08.03.2001 JP 2001064625**
**14.03.2001 JP 2001071845**

(71) Applicant: **Fuji Photo Film Co., Ltd.**
**Kanagawa 250-0123 (JP)**

(72) Inventors:
- **AMINAKA, Eiichiro**
**Minami-ashigara-shi, Kanagawa 250-0123 (JP)**
- **HASHIMOTO, Kiyokazu**
**Minami-ashigara-shi, Kanagawa 250-0123 (JP)**

(74) Representative: **HOFFMANN - EITLE**
**Patent- und Rechtsanwälte**
**Arabellastrasse 4**
**81925 München (DE)**

# (54) OPTICAL COMPENSATING SHEET HAVING OPTICALLY ANISOTROPIC LAYER MADE OF DISCOTIC LIQUID-CRYSTALLINE MOLECULES AND TRANSPARENT SUBSTRATE COMPRISING POLYMER FILM

(57) An optical compensatory sheet comprises a transparent support and an optically anisotropic layer. The optically anisotropic layer is made from discotic liquid crystal molecules. The transparent support is made of a polymer film. The polymer film has an Re retardation value in the range of 10 to 70 nm. The polymer film also has an Rth retardation value in the range of 70 to 400 nm. The polymer film further has a standard deviation of angle of slow axis of 1.5° or less.

EP 1 341 007 A1

## Description

[Field of invention]

The present invention relates to an optical compensatory sheet comprising an optically anisotropic layer made from discotic liquid crystal molecules on a transparent support made of a polymer film. The invention also relates to a polarizing plate and a liquid crystal display comprising the optical compensatory sheet.

[Background of invention]

A liquid crystal display (LCD) has advantages of thin shape, lightweight and low consumption of electric power, compared with a cathode ray tube (CRT). The liquid crystal display comprises a liquid crystal cell and two polarizing plates arranged on both sides of the liquid crystal cell. The liquid crystal cell comprises a pair of substrates, rod-like liquid crystal molecules and an electrode layer. The rod-like liquid crystal molecules are provided between the substrates. The electrode layer has a function of applying a voltage to the rod-like liquid crystal molecules. Each of the substrates has an orientation layer, which has a function of aligning the liquid crystal molecules.

An optically compensatory sheet (a phase retarder) is usually provided between the liquid crystal cell and the polarizing plates to remove undesirable color from an image displayed on the liquid crystal cell. A lamination of the optically compensatory sheet and the polarizing plate functions as an elliptically polarizing plate. In some cases, the optical compensatory sheet is made to work for enlarging the viewing angle of the liquid crystal cell.

As the optical compensatory sheet, a stretched synthetic polymer film (e.g., polycarbonate film, polysulfone film) ha been conventionally used.

However, in place of the synthetic polymer film, it has been proposed to use an optical compensatory sheet comprising a transparent support and a thereon-provided optically anisotropic layer made from discotic liquid crystal molecules. The optically anisotropic layer is prepared through the steps of aligning discotic liquid crystal molecules and fixing the alignment. Since the discotic liquid crystal molecules generally have a large birefringence and can be oriented in various alignments, an optical compensatory sheet obtained by using the discotic liquid crystal molecules has a specific optical characteristic that cannot be obtained by the conventional synthetic polymer film. The optical compensatory sheet using the discotic liquid crystal molecules is described in Japanese Patent Provisional Publication No. 6(1994)-214116, U.S. Patent Nos. 5,583,679, 5,646,703 and West German Patent Publication No. 3,911,620A1.

As the transparent support of optical compensatory sheet, a cellulose acetate film is generally used if the support must be optically isotropic (must have low retardation values). In contrast, if an optically anisotropic support (having high retardation values) is needed, a stretched synthetic polymer film (e.g., polycarbonate film, polysulfone film) is used.

In the field of optical elements such as the optical compensatory sheet, it has been a general principle that a synthetic polymer film or a cellulose acetate film is generally used when the support must be optically anisotropic (must have high retardation values) or optically isotropic (must have low retardation values), respectively.

In spite of that principle, European Patent No. 0,911,656 A2 discloses a cellulose acetate film having such high retardation values that it can be used when high optical anisotropy is required.

[Summary of invention]

U.S. Patent Nos. 4,583,825 and 5,410,422 disclose a liquid crystal display of bend alignment mode comprising a liquid crystal cell in which rod-like liquid crystal molecules are aligned symmetrically. The alignment of upper liquid crystal molecules is essentially anti-parallel (symmetrical) to the alignment of lower liquid crystal molecules, and hence the liquid crystal cell of the bend alignment mode has a self-optically compensatory function. Therefore, the bend alignment mode is also referred to as an optically compensatory bend (OCB) mode. The liquid crystal display of bend alignment mode has an advantage of quick response.

The bend alignment mode is characterized in a wide viewing angle and a quick response, as compared with conventional liquid crystal modes (TN mode, STN mode). However, a further improvement is still necessary to be comparable with CRT.

It is proposed that an optical compensatory sheet be used for improving the liquid crystal display of bend alignment mode in the same manner as in conventional liquid crystal displays. In fact, Japanese Patent Provisional Publication No. 9(1997)-197397 (U.S. Patent No. 5,805,253), International Patent Publication No. WO96/37804 (European Patent Publication No. 0,783,128 A) and Japanese Patent Provisional Publication No. 11(1999)-316378 (U.S. Patent No. 6,064,457) disclose an optical compensatory sheet comprising an optically anisotropic layer made from discotic liquid crystal molecules and a liquid crystal display of bend alignment mode comprising that compensatory sheet.

The optical compensatory sheet comprising an optically anisotropic layer made from discotic liquid crystal molecules gives a wide viewing angle to the liquid crystal display of bend alignment mode. However, the inventors have found that the liquid crystal display often has uneven displaying characters (e.g., front contrast ratio, viewing angle) on its displaying screen.

An object of the invention is to compensate a liquid crystal cell of bend alignment mode enough to obtain even and excellent displaying characters on the screen.

The inventors have studied and found that, in order to compensate a liquid crystal cell of bend alignment mode so that excellent displaying characters may be realized evenly on the screen, the transparent support of polymer film in the optical compensatory sheet must have controlled retardation values and further the angle of the slow axis in the support must have a controlled standard deviation.

The present invention provides an optical compensatory sheet comprising a transparent support and an optically anisotropic layer made from discotic liquid crystal molecules; wherein the transparent support comprises a polymer film in which retardation values Re and Rth defined by the following formulas (I) and (II) are in the ranges of 10 to 70 nm and 70 to 400 nm, respectively, and in which the standard deviation of angle of slow axis is 1.5° or less:

(I) $Re = (nx-ny) \times d$
(II) $Rth = \{(nx+ny)/2-nz\} \times d$

in which nx is a refractive index along the slow axis in the film plane, ny is a refractive index along the fast axis in the film plane, nz is a refractive index along the depth of film, and d is the thickness of film in terms of nm.

The invention also provides an elliptically polarizing plate comprising an optically anisotropic layer made from discotic liquid crystal molecules, a transparent support, a polarizing membrane and a transparent protective film piled up in this order, or otherwise comprising a transparent support, an optically anisotropic layer made from discotic liquid crystal molecules, a polarizing membrane and a transparent protective film piled up in this order; wherein the transparent support comprises a polymer film in which retardation values Re and Rth defined by the above formulas (I) and (II) are in the ranges of 10 to 70 nm and 70 to 400 nm, respectively, and in which the standard deviation of angle of slow axis is 1.5° or less; said slow axis in the support being placed at an average angle of -3° to 3° to the transmission axis of the polarizing membrane.

The invention further provides a liquid crystal display comprising two polarizing plates and a liquid crystal cell of bend aligning mode provided between the plates; wherein at least one of the plates is an elliptically polarizing plate comprising an optically anisotropic layer made from discotic liquid crystal molecules, a transparent support, a polarizing membrane and a transparent protective film piled up in this order, or otherwise comprising a transparent support, an optically anisotropic layer made from discotic liquid crystal molecules, a polarizing membrane and a transparent protective film piled up in this order; said transparent support comprising a polymer film in which retardation values Re and Rth defined by the above formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane.

The invention still further provides an elliptically polarizing plate comprising an optically anisotropic layer made from discotic liquid crystal molecules, a transparent support, a transparent protective film, a polarizing membrane and another transparent protective film piled up in this order, or otherwise comprising a transparent support, an optically anisotropic layer made from discotic liquid crystal molecules, a transparent protective film, a polarizing membrane and another transparent protective film piled up in this order; wherein the transparent support comprises a polymer film in which retardation values Re and Rth defined by the above formulas (I) and (II) are in the ranges of 10 to 70 nm and 70 to 400 nm, respectively, and in which the standard deviation of angle of slow axis is 1.5° or less; said slow axis in the support being placed at an average angle of -3° to 3° to the transmission axis of the polarizing membrane.

The invention furthermore provides a liquid crystal display comprising two polarizing plates and a liquid crystal cell of bend aligning mode provided between the plates; wherein at least one of the plates comprises an elliptically polarizing plate comprising an optically anisotropic layer made from discotic liquid crystal molecules, a transparent support, a transparent protective film, a polarizing membrane and another transparent protective film piled up in this order, or otherwise comprising a transparent support, an optically anisotropic layer made from discotic liquid crystal molecules, a transparent protective film, a polarizing membrane and another transparent protective film piled up in this order; each of said transparent support and said transparent protective film placed between the transparent support and the polarizing membrane comprising a polymer film in which retardation values Re and Rth defined by the above formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane.

The invention still furthermore provides a liquid crystal display comprising two polarizing plates and a liquid crystal cell of bend aligning mode provided between the plates; wherein a transparent protective film and an optical

compensatory sheet comprising a transparent support and an optically anisotropic layer made from discotic liquid crystal molecules are provided between the liquid crystal cell and at least one polarizing plate, each of said transparent protective film and said transparent support comprising a polymer film in which retardation values Re and Rth defined by the above formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane.

In the present specification, the term "standard deviation of angle of slow axis" means the standard deviation of angles obtained by measuring the slow axis at ten points on the polymer film. The slow axis measured at each point is oriented at each angle to a standard direction (for example, stretching direction of the film), and hence the angle of slow axis at each point was measured to obtain the standard deviation. The ten points each at which the angle of slow axis is measured are laterally arranged at equal intervals.

Also in the specification, the terms "slow axis" and "transmission axis" mean the directions giving the maximum refractive index and the maximum transmittance, respectively.

The inventors have studied and finally succeeded in obtaining an optically compensatory sheet that can optically compensate a liquid crystal cell of bend alignment mode adequately.

In the optically compensatory sheet of the invention, the optical anisotropy of the optical anisotropic layer formed form discotic liquid crystal molecules and that of the transparent support cooperatively and optically compensate the liquid crystal cell of bend alignment mode. If a polymer film in which the retardation values and the standard deviation of angle of slow axis are controlled is used as the support, the compensatory sheet optically compensates a liquid crystal cell of bend alignment mode adequately enough to realize excellent displaying characters evenly on the screen.

[Brief description of drawings]

Fig. 1 is a sectional view schematically illustrating alignment of rod-like liquid crystal molecules in a liquid crystal cell of bend alignment mode.
Fig. 2 schematically illustrates an elliptically polarizing plate.
Fig. 3 schematically illustrates a liquid crystal display of bend alignment mode.
Fig. 4 schematically illustrates a relation of optical compensation in a liquid crystal display of bend alignment mode.

[Detailed description of invention]

(Basic structure of liquid crystal display)

Fig. 1 is a sectional view schematically illustrating alignment of liquid crystal molecules in a liquid crystal cell of bend alignment mode.

As is shown in Fig. 1, a bend alignment liquid crystal cell comprises an upper substrate (14a), a lower substrate (14b) and liquid crystal molecules (11) sealed between the substrates. The liquid crystal molecules (11) used in a bend alignment liquid crystal cell generally has positive dielectric constant anisotropy. Each of the upper substrate (14a) and lower substrate (14b) has an orientation layer (12a, 12b) and an electrode (13a, 13b). The orientation layer has a function of aligning the rod-like liquid crystal molecules (11a to 11j). The arrow RD in Fig. 1 means the rubbing direction of the orientation layer. The electrode has a function of applying voltage to the rod-like liquid crystal molecules (11a to 11j).

As is shown in (off) of Fig. 1, the alignment of the liquid crystal molecules (11a to 11e) near the upper substrate (14a) is substantially anti-parallel (symmetrical) to the alignment of the molecules (11f to 11j) near the lower substrate (14b) when the applied voltage is low. The liquid crystal molecules (11a, 11b, 11i, 11j) neighboring the substrates (14a, 14b) are essentially horizontally aligned, while the liquid crystal molecules (11d to 11g) centered in the liquid crystal cell are essentially vertically aligned.

As is shown in (on) of Fig. 1, the liquid crystal molecules (11a, 11j) neighboring the substrates (14a, 14b) are still essentially horizontally aligned when the applied voltage is high. Also, the liquid crystal molecules (11e, 11f) centered in the liquid crystal cell are still essentially vertically aligned. The alignment of the other liquid crystal molecules (11b, 11c, 11d, 11g, 11h, 11i) is changed when the applied voltage is increased. These molecules are rather vertically aligned compared with the alignment of the off state. The alignment of the liquid crystal molecules (11a to 11e) near the upper substrate (14a) is still substantially anti-parallel (symmetrical) to the alignment of the molecules (11f to 11j) near the lower substrate (14b) even if the applied voltage is high.

Fig. 2 schematically illustrates an elliptically polarizing plate.

As is shown in Fig. 2, an elliptically polarizing plate comprises a lamination of an optically anisotropic layer

(31) made from discotic liquid crystal molecules (31a to 31e), an optically anisotropic transparent support (33) and a polarizing membrane (34). The elliptically polarizing plate shown in Fig. 2 further comprises an orientation layer (32) between the optically anisotropic layer (31) and the transparent support (33).

The discotic liquid crystal molecules (31a to 31e) are planer molecules, and hence each of them has only one plane, namely discotic plane. The discotic planes are inclined to the place of the transparent support (33). The angle between each discotic plane and the support plane (inclined angle) increases as the distance between the molecule and the orientation layer (32) increases. The average inclined angle is preferably in the range of 20 to 50°. If the inclined angles are changed as shown in Fig. 2, the elliptically polarizing plate is remarkably improved in enlarging the viewing angle. Further, such elliptically polarizing plate has another function of preventing the displayed image from reversion, gray-scale inversion and undesirable coloring.

In Fig. 2, the average of directions (PL) obtained by projecting normal lines (NL) of discotic planes of the discotic molecules (31a to 31e) onto the plane of the support (33) is anti-parallel to the rubbing direction (RD) of the orientation layer (32). The angle between the average of PL directions and the slow axis (SA) in the plane of the support (33) is preferably 45°. Therefore, in preparation of the elliptically polarizing plate, an angle (θ) between the rubbing direction (RD) of the orientation layer (32) and the slow axis (SA) in the plane of the transparent support (33) is essentially adjusted to 45°.

Further, in Fig. 2, the transparent support (33) and the polarizing membrane (34) are so arranged that the slow axis (SA) in the plane of the transparent support is essentially parallel to the transmission axis (TA) in plane of the polarizing membrane. The slow axis (SA) in the plane of the transparent support (33) generally corresponds to the stretching direction of the support (33). The transmission axis (TA) in the plane of the polarizing membrane (34) is generally perpendicular to the stretching direction of the membrane (34).

Fig. 3 schematically illustrates a liquid crystal display of bend alignment mode.

The liquid crystal display shown in Fig. 3 comprises a liquid crystal cell of bend alignment mode (10), two polarizing elements (31A to 34A, 31B to 34B) arranged on both sides of the liquid crystal cell, and a back light (BL).

The liquid crystal cell of bend alignment mode (10) corresponds to that shown in Fig. 1. The rubbing directions (RD2, RD3) in the liquid crystal cell (10) are identical (parallel to each other).

The elliptically polarizing plate comprises a lamination of an optically anisotropic layer (31A, 31B), a transparent support (33A, 33B) and a polarizing membrane (34A, 34B) in this order from the side of the liquid crystal cell (10). The rubbing directions (RD1, RD4) for aligning the discotic liquid crystal molecules in the optically anisotropic layer (31A, 31B) are anti-parallel to the rubbing directions (RD2, RD3) in the liquid crystal cell (10). The rubbing directions (RD1, RD4) for aligning the discotic liquid crystal molecules are anti-parallel to the average of directions obtained by projecting normal lines of discotic planes of the discotic molecules onto the plane of the support. The angles between the rubbing directions (RD1, RD4) and the slow axes (SA1, SA2) in the plane of the transparent support (33A, 33B) are essentially 45° in the same plane. The angles between the rubbing directions (RD1, RD4) and the transmission axes (TA1, TA2) in the plane of the polarizing membranes (34A, 34B) are also essentially 45° in the same plane. The polarizing membranes (34A, 34B) are so arranged the transmission axes (TA1, TA2) are perpendicular to each other (in cross-Nicol arrangement).

Fig. 4 schematically illustrates a relation of optical compensation in a liquid crystal display of bend alignment mode.

As shown in Fig. 4, the bend alignment liquid crystal cell (10) is optically compensated with cooperation between optically anisotropic layers (31A, 31B) and optically anisotropic transparent substrates (33A, 33B) in the liquid crystal display.

The rubbing directions (RD1, RD4) for aligning the discotic liquid crystal molecules in the optically anisotropic layers (31A, 31B) are placed anti-parallel to the rubbing directions (RD2, RD3) of the liquid crystal cell. In that arrangement, the liquid crystal molecules in the bend alignment liquid crystal cell (10) are optically compensated by the corresponding (shown as the relations a to c and e to g) discotic liquid crystal molecules in the optically anisotropic layers (31A, 31B). At the same time, the optical anisotropic transparent supports (33A, 33B) correspondingly (shown as the relations d and h) compensate the essentially vertically aligned liquid crystal molecule centered in the bend alignment liquid crystal cell (10). The ellipsoids shown in the transparent support (33A, 33B) mean refractive index ellipsoids caused by optical anisotropy of the transparent supports.

(Retardation values of polymer film)

The Re and Rth retardation values of the polymer film are defined by the following formulas (I) and (II), respectively:

(I) $Re = (nx-ny) \times d$
(II) $Rth = \{(nx+ny)/2-nz\} \times d$.

In the formulas (I) and (II), nx is a refractive index along the slow axis (in the direction giving the maximum refractive index) in the film plane.

In the formulas (I) and (II), ny is a refractive index along the fast axis (in the direction giving the minimum refractive index) in the film plane.

In the formula (II), nz is a refractive index along the depth of the film.

In the formulas (I) and (II), d is the thickness of the film in terms of nm.

In the invention, the Re and Rth retardation values of the polymer film are controlled in the ranges of 10 to 70 nm (preferably 20 to 70 nm) and 70 to 400 nm, respectively.

If two optical anisotropic polymer films are used in the liquid crystal display, the Rth retardation value of each film is preferably in the range of 70 to 200 nm.

If a single optical anisotropic polymer film is used, the Rth retardation value of the film is preferably in the range of 150 to 400 nm.

The birefringence (Δn: nx-ny) of the polymer film is preferably in the range of 0.00025 to 0.00088, and that along the thickness of the transparent support {(nx+ny)/2-nz} is preferably in the range of 0.00088 to 0.005.

(Angle of slow axis in polymer film)

The stretching direction of polymer film is defined as the standard line (0°), and the angle of slow axis in the transparent support is defined as an angle between the slow axis and the standard line. In the case where a film in the form of a roll is laterally stretched, the lateral direction is the standard line. If the film is longitudinally stretched, the longitudinal direction is the standard line.

The average angle of slow axis is preferably 3° or less, more preferably 2° or less, most preferably 1° or less. A direction making the average angle of slow axis is defined as the average direction of slow axis.

The angle of slow axis has a standard deviation of preferably 1.5° or less, more preferably 0.8° or less, most preferably 0.4° or less.

The angle of slow axis is within a fluctuation range of preferably 5° or less, more preferably 3° or less, most preferably 2° or less. For determining the fluctuation range, the direction (angle) of slow axis was measured at 20 points laterally arranged in the whole width in equal intervals. The first to fourth largest measured angles in absolute values were averaged, and also the first to fourth smallest angles in absolute values were averaged. The difference between the former and the latter average angles is defined as the fluctuation range.

(Shrink-starting temperature)

The polymer film preferably has a shrink-starting temperature of 130 to 190°C.

After electrified for a certain time, a liquid crystal display equipped with an optical compensatory sheet often gives an image framed with uneven displaying defects. According to the study of the inventors, these defects are caused by increase of transmittance at the peripheral part of the screen. Particularly when a black image is displayed, the defects remarkably increase.

The inventors have studied the cause of the displaying defects, and found that they are caused by uneven tension generated in the production step of laminating the compensatory sheet onto the liquid crystal cell. Accordingly, if the compensatory sheet is completely and accurately laminated on the cell, the uneven tension is not generated and hence the displaying defects are avoided. In a practical production process, however, it is very difficult to laminate the compensatory sheet on the cell such precisely.

The inventors have further studied, and got the idea that the optical compensatory sheet is intentionally made to shrink with heat generated by the backlight of LCD so properly that the uneven tension is cancelled. However, to realize the idea, the polymer film in the optical compensatory sheet must shrink properly. If the polymer film shrinks little with heat, the uneven tension is not cancelled. In contrast, if the film shrinks too much, the uneven tension is rather enhanced.

According to the study of the inventors, a conventional synthetic polymer film shrinks too little while a conventional cellulose acetate film shrinks too much.

The inventors have found that a polymer film having a shrink-starting temperature of 130 to 190°C shrinks properly. The shrink-starting temperature of conventional synthetic polymer film is higher than 190°C, and that of conventional cellulose acetate film is lower than 130°C.

The shrink-starting temperature is more preferably in the range of 140 to 180°C, most preferably in the range of 140 to 170°C. The shrink-starting temperature can be measured by means of a TMA (thermal mechanical analyzer). For determining the shrink-starting temperature, the length of a sample film is measured along the stretching direction while the sample is being heated, to find the temperature at which it shrinks by 2% based on the original length.

The conditions of the film forming process (including the stretching process) described below are controlled

to obtain the aimed shrink-starting temperature.

(Breaking extension point and breaking stress point)

The polymer film has a breaking extension point preferably in the range of 10 to 30%, more preferably in the range of 15 to 29%, further preferably in the range of 20 to 28%. The breaking stress point of the polymer film is preferably in the range of 11 to 20 kg/$m^2$, more preferably in the range of 12 to 19 kg/$m^2$, further preferably in the range of 13 to 18 kg/$m^2$. For measuring the breaking extension point and the breaking stress point, the film is cut along the stretching direction (if biaxially stretched, along the direction in which it was more stretched) into a sample strip. The thus-prepared sample is stretched to break under the condition of 25°C and 60%RH at the speed of 10%/minute, so as to measure how long the sample is stretched and how much the sample is stressed when it is broken. Thus, the extension and the stress (value of load per section of the sample before stretched) at which the sample is broken are measured to determine the breaking extension point and the breaking stress point, respectively.

When the optical compensatory sheet is cut and laminated on the liquid crystal cell in the process for producing the liquid crystal display, dust and fine wastes are generally generated. The dust and fine wastes are often attached on the compensatory sheet or on the cell to cause "undesirable brilliant points", which undesirably shine like stars when a dark image is displayed. If the polymer film having a breaking extension point and a breaking stress point in the above ranges is used as the transparent support in the optical compensatory sheet, the undesirable brilliant points are remarkably reduced.

(Polymer for film)

The polymer film preferably has a light transmittance of 80% or more. Preferably, the polymer film hardly shows birefringence even if external force is applied. Examples of the polymer film include films of cellulose-based polymers, norbornene-based polymers (e.g., ARTON [trade name] from JSR Corporation and Zeonex [trade name] from Nippon Zeon Co., Ltd.), and polymethyl methacrylate.

After electrified for a certain time, an LCD of transmission type equipped with an optical compensatory sheet often displays an image framed with uneven displaying defects (what is called, "framewise unevenness"). This is caused by increase of transmittance at the peripheral part of the screen, and particularly when a black image is displayed it remarkably increases. Further, in the LCD of transmission type, heat is generated at the backlight and unevenly distributed in the liquid crystal cell. The uneven thermal distribution changes the optical characters (retardation values, angle of slow axis) of the optical compensatory sheet, and thereby "framewise unevenness" is caused. When the temperature rises, the optical compensatory sheet expands or shrinks. However, the expansion or shrinkage is limited since the sheet is fixed on the liquid crystal cell or on the polarizing membrane, and accordingly the sheet is elastically deformed to change the optical characters.

In order to avoid "framewise unevenness", it is preferred to use a polymer film having high thermal conductivity. Examples of the polymer having high thermal conductivity include cellulose acetate [0.22 W/(m·°C)], low density polyethylene [0.34 W/(m·°C)], ABS [0.36 W/(m·°C)] and polycarbonate [0.19 W/(m·°C)]. Cyclic olefin polymers such as ZEONEX [0.20 W/(m·°C), from Nippon Zeon Co., Ltd.], ZEONOR [0.20 W/(m·°C), from Nippon Zeon Co., Ltd.] and ARTON [0.20 W/(m·°C), from JSR co., Ltd.] are also usable.

As the polymer for the film, cellulose polymers are preferred in consideration of optical and thermal characters. Cellulose esters are more preferred, and cellulose esters of lower fatty acids are further preferred as the polymers. The term "lower fatty acids" means fatty acids having 6 or less carbon atoms. The number of carbon atoms is preferably 2 (cellulose acetate), 3 (cellulose propionate) or 4 (cellulose butyrate). Cellulose esters of mixed fatty acids such as cellulose acetate propionate and cellulose acetate butyrate are also usable.

Cellulose acetate is most preferred. The acetic acid content of cellulose acetate is preferably in the range of 59.0 to 61.5%. The term "acetic acid content" means the amount of combined acetic acid per one unit weight of cellulose. The acetic acid content is determined according to ASTM: D-817-91 (tests of cellulose acetate).

A cellulose unit generally has three hydroxyls that can be esterified with acetic acid. They are positioned at 2-, 3- and 6-positions. The hydroxyl group at 6-position is substituted in an amount of preferably 30 to 40%, more preferably 31 to 39%, most preferably 32 to 38% based on the total substitution degree.

Generally, the hydroxyl groups at 2-, 3- and 6-position of cellulose acetate are not equally substituted (namely, the substitution degree at each position is not equal to one third of the total substitution degree), and the substitution degree at 6-position is apt to be relatively small (normally approx. 28%). If the substitution degree at 6-position is made larger than those at 2- and 3-positions as described above, undesirable whitening can be avoided. The undesirable whitening is often caused in stretching the film.

Cellulose acetate generally consists of such rigid glucopyranose structures that it is liable to break easily, and accordingly its breaking extension point is approx. 1/10 of that of polyester (which has excellent elasticity). Consequently, cellulose acetate often undesirably whitens in the stretching step. When stretched, the molecule of cellulose acetate is broken to cause crazes. In that case, the film is whitened unevenly in the lateral direction. In fact, the central area is more easily whitened than the both sides because the extension ratio in the central area is apt to be higher than that in the side area. The undesirably whitened film has uneven haze, and accordingly it makes the resultant liquid crystal display give an image with uneven brightness. In the displayed image, a part where the haze is higher looks less bright.

The cellulose acetate having a high acetic acid content at 6-position has a relatively high breaking extension point, and accordingly less suffers from the undesirable whitening. In a cellulose unite, hydroxyls at 2- and 3-positions are directly bound to a glucopyranose ring while a hydroxyl at 6-position is bound to the ring through methylene. Therefore, the hydroxyl at 6-position can move freely enough to relate with other molecules. The relation between the hydroxyl at 6-position and other molecules is presumed to work as weak cross-linking to prevent the molecules from breaking and consequently to reduce the whitening.

The hydroxyl group at 6-position may be substituted with an acyl group having 3 or more carbon atoms other than acetyl. Examples of the acyl groups having 3 or more carbon atoms include propionyl, butyloyl, valeroyl, benzoyl and acryloyl. The substitution degree at each position can be measured by means of NMR.

The cellulose acetate having a high acetic acid content at 6-position can be prepared according to the methods described in Japanese Patent Provisional Publication No. 11(1999)-5851.

The cellulose acetate has a viscosity average polymerization degree (DP) of preferably 250 or more, more preferably 290 or more. Further, it is also preferred for the cellulose acetate to have a narrow molecular weight distribution of Mw/Mn (Mw and Mn are weight and number average molecular weights, respectively) determined by gel permeation chromatography. The value of Mw/Mn is preferably in the range of 1.00 to 1.70, more preferably in the range of 1.30 to 1.65, most preferably in the range of 1.40 to 1.60.

(Retardation-increasing agent)

An aromatic compound having at least two aromatic rings can be used as a retardation-increasing agent for controlling the retardation of the polymer film.

The aromatic compound is added in an amount of 0.01 to 20 weight parts, preferably in an amount of 0.05 to 15 weight parts, more preferably in an amount of 0.1 to 10 weight parts, based on 100 weight parts of the polymer. Two or more aromatic compounds may be used in combination.

The term 'an aromatic ring' means not only an aromatic hydrocarbon ring but also an aromatic heterocyclic ring.

As the aromatic hydrocarbon ring, a six-membered ring (namely, a benzene ring) is particularly preferred.

The aromatic heterocyclic ring is generallyunsaturated. The aromatic heterocyclic ring is preferably a five-, six- or seven-membered ring, and more preferably a five- or six-membered ring. The aromatic heterocyclic ring generally has double bonds as many as possible. The hetero-atom in the ring preferably is nitrogen atom, sulfur atom or oxygen atom, and more preferably is nitrogen atom. Examples of the aromatic heterocyclic ring include furan ring, thiophene ring, pyrrole ring, oxazole ring, isoxazole ring, thiazole ring, isothiazole ring, imidazole ring, pyrazole ring, furazane ring, triazole ring, pyran ring, pyridine ring, pyridazine ring, pyrimidine ring, pyrazine ring and 1,3,5-triazine ring.

Preferred aromatic rings are benzene ring, furan ring, thiophene ring, pyrrole ring, oxazole ring, thiazole ring, imidazole ring, triazole ring, pyridine ring, pyrimidine ring, pyrazine ring and 1,3,5-triazine ring. Benzene ring and 1,3,5-triazine ring are more preferred

The aromatic compound preferably contains at least one 1,3,5-triazine ring.

The number of aromatic rings in the aromatic compound is preferably in the range of 2 to 20, more preferably in the range of 2 to 12, further preferably in the range of 2 to 8, and most preferably in the range of 2 to 6.

The relation of the two or more aromatic rings is categorized into three cases, namely

(a) the case in which the aromatic rings form a condensed ring,
(b) the case in which the aromatic rings are connected through a single bond, and
(c) the case in which the aromatic rings are connected through a linking group. [In this case, a spiro-bonding is not formed because the rings are aromatic.]

The relation of the aromatic rings may be any of the cases (a) to (c).

Examples of the condensed ring in the case (a) include indene ring, naphthalene ring, azulene ring, fluorene ring, phenanthrene ring, anthracene ring, acenaphthylene ring, naphthacene ring, pyrene ring, indole ring, isoindole ring, benzofuran ring, benzothiophene ring, indolizine ring, benzoxazole ring, benzothiazole ring, benzimidazole ring, benztriazole ring, purine ring, indazole ring, chromene ring, quinoline ring, isoquinoline ring, quinolizine ring, quinazoline ring, cinnoline ring, quinoxaline ring, phthalazine ring, pteridine ring, carbazole ring, acridine ring, phenanthridine ring,

xanthene ring, phenazine ring, phenothiazine ring, phenoxthine ring, phenoxazine ring and thianthrene ring. Preferred are naphthalene ring, azulene ring, indole ring, benzoxazole ring, benzothiazole ring, benzimidazole ring, benztriazole ring and quinoline ring.

The single bond in the case (b) is preferably between carbon atoms of the two aromatic rings. Two or more single bonds may connect the two aromatic rings to form an aliphatic ring or a non-aromatic ring between them.

The linking group in the case (c) is also preferably between carbon atoms of the two aromatic rings. The linking group is preferably an alkylene group, an alkenylene group, an alkynylene group, -CO-, -O-, -NH-, -S- and a combination thereof.

Examples of the linking group formed by the combination are shown below. In each of the following examples, the right and left terminals may be reversed.

c1: -CO-O-
c2: -CO-NH-
c3: -alkylene-O-
c4: -NH-CO-NH-
c5: -NH-CO-O-
c6: -O-CO-O-
c7: -O-alkylene-O-
c8: -CO-alkenylene-
c9: -CO-alkenylene-NH-
c10: -CO-alkenylene-O-
c11: -alkylene-CO-O-alkylene-O-CO-alkylene-
c12: -O-alkylene-CO-O-alkylene-O-CO-alkylene-O-
c13: -O-CO-alkylene-CO-O-
c14: -NH-CO-alkenylene-
c15: -O-CO-alkenylene-

The aromatic ring and the linking group may have substituent groups.

Examples of the substituent group include halogen atoms (F, Cl, Br, I), hydroxyl, carboxyl, cyano, amino, nitro, sulfo, carbamoyl, sulfamoyl, ureido, an alkyl group, an alkenyl group, an alkynyl group, an aliphatic acyl group, an aliphatic acyloxy group, an alkoxy group, an alkoxycarbonyl group, an alkoxycarbonylamino group, an alkylthio group, an alkylsulfonyl group, an aliphatic amide group, an aliphatic sulfoneamide group, an aliphatic substituted amine group, an aliphatic substituted carbamoyl group, an aliphatic substituted sulfamoyl group, an aliphatic substituted ureido group and a non-aromatic heterocyclic group.

The alkyl group preferably has 1 to 8 carbon atoms. A chain alkyl group is preferred to a cyclic one, and a straight chain alkyl group is particularly preferred. The alkyl group may further have a substituent group (e.g., hydroxyl, carboxyl, an alkoxy group, an alkyl-substituted amino group). Examples of the (substituted) alkyl group include methyl, ethyl, n-butyl, n-hexyl, 2-hydroxyethyl, 4-carboxybutyl, 2-methoxyethyl and 2-diethylaminoethyl.

The alkenyl group preferably has 2 to 8 carbon atoms. A chain alkenyl group is preferred to a cyclic one, and a straight chain alkenyl group is particularly preferred. The alkenyl group may further have a substituent group. Examples of the alkenyl group include vinyl, allyl and 1-hexenyl.

The alkynyl group preferably has 2 to 8 carbon atoms. A chain alkynyl group is preferred to a cyclic one, and a straight chain alkynyl group is particularly preferred. The alkynyl group may further have a substituent group. Examples of the alkynyl group include ethynyl, 1-butynyl and 1-hexynyl.

The aliphatic acyl group preferably has 1 to 10 carbon atoms. Examples of the aliphatic acyl group include acetyl, propanoyl and butanoyl.

The aliphatic acyloxy group preferably has 1 to 10 carbon atoms. Examples of the aliphatic acyloxy group include acetoxy.

The alkoxy group preferably has 1 to 8 carbon atoms. The alkoxy group may further have a substituent group (e.g., another alkoxy group). Examples of the (substituted) alkoxy group include methoxy, ethoxy, butoxy and methoxyethoxy.

The alkoxycarbonyl group preferably has 2 to 10 carbon atoms. Examples of the alkoxycarbonyl group include methoxycarbonyl and ethoxycarbonyl.

The alkoxycarbonylamino group preferably has 2 to 10 carbon atoms. Examples of the alkoxycarbonylamino group include methoxycarbonylamino and ethoxycarbonylamino.

The alkylthio group preferably has 1 to 12 carbon atoms. Examples of the alkylthio group include methylthio, ethylthio and octylthio.

The alkylsulfonyl group preferably has 1 to 8 carbon atoms. Examples of the alkylsulfonyl group include methanesulfonyl and ethanesulfonyl.

The aliphatic amide group preferably has 1 to 10 carbon atoms. Examples of the aliphatic amide group include acetoamide

The aliphatic sulfoneamide group preferably has 1 to 8 carbon atoms. Examples of the aliphatic sulfoneamide group include methanesulfoneamide, butanesulfoneamide and n-octanesulfoneamide.

The aliphatic substituted amine group preferably has 1 to 10 carbon atoms. Examples of the aliphatic substituted amine group include dimethylamino, diethylamino and 2-carboxyethyl amino.

The aliphatic substituted carbamoyl group preferably has 2 to 10 carbon atoms. Examples of the aliphatic substituted carbamoyl group include methylcarbamoyl and diethylcarbamoyl.

The aliphatic substituted sulfamoyl group preferably has 1 to 8 carbon atoms. Examples of the aliphatic substituted sulfamoyl group include methylsulfamoyl and diethylsulfamoyl.

The aliphatic substituted ureido group preferably has 2 to 10 carbon atoms. Examples of the aliphatic substituted ureido group include methylureido.

Examples of the non-aromatic heterocyclic group include piperidino and morpholino.

The retardation-increasing agent has a molecular weight of 300 to 800.

Concrete examples of the retardation-increasing agent are described in Japanese Patent Provisional Publication Nos. 2000-111914, 2000-275434 and PCT/JP 00/02619.

(Production of polymer film)

The polymer film is preferably prepared according to solvent cast method. In the solvent cast method, a solution (dope) in which the polymer is dissolved in an organic solvent is used.

The organic solvent preferably contains a solvent selected from the group consisting of an ether having 3 to 12 carbon atoms, a ketone having 3 to 12 carbon atoms, an ester having 3 to 12 carbon atoms and a halogenated hydrocarbon having 1 to 6 carbon atoms.

The ether, the ketone or the ester may have a cyclic structure. A compound having two or more functional groups of ether, ketone or ester (-O-, -CO- or -COO-) is also usable as the solvent. The organic solvent may have other functional groups such as alcoholic hydroxyl. If the solvent is the compound having two or more functional groups, the number of carbon atoms is in any of the above ranges.

Examples of the ether having 3 to 12 carbon atoms include diisopropyl ether, dimethoxymethane, 1,4-dioxane, 1,3-dioxolane, tetrahydrofuran, anisole and phenetol.

Examples of the ketone having 3 to 12 carbon atom include acetone, methyl ethyl ketone, diethyl ketone, diisobutyl ketone, cyclohexanone and methylcyclohexanone.

Examples of the ester having 3 to 12 carbon atoms include ethyl formate, propyl formate, pentyl formate, methyl acetate, ethyl acetate, and pentyl acetate.

Examples of the compounds having two or more functional groups include 2-ethoxyethyl acetate, 2-methoxyethanol and 2-butoxyethanol.

The halogenated hydrocarbon has preferably one or two carbon atoms, more preferably only one carbon atom. The halogen atom of the halogenated hydrocarbon is preferably chlorine. The ratio of hydrogen substituted with halogen is preferably in the range of 25 to 75 mol.%, more preferably in the range of 30 to 70 mol.%, further preferably in the range of 35 to 65 mol.%, and most preferably in the range of 40 to 60 mol.%. Methylene chloride is a representative halogenated hydrocarbon.

From the technical viewpoint, the halogenated hydrocarbon such as methylene chloride can be used without any problem. However, in consideration of the global environment and working conditions, the organic solvent preferably contains essentially no halogenated hydrocarbon. This means that the organic solvent preferably contains halogenated hydrocarbon in an amount of less than 5 wt.% (more preferably less than 2 wt.%). Also preferably, halogenated hydrocarbon such as methylene chloride is not found in the resultant film at all.

Two or more organic solvents can be used in combination.

The polymer solution (dope) can be prepared according to an ordinary method. The ordinary method means that the solution is prepared at a temperature of not lower than 0°C (room temperature or elevated temperature). The polymer solution (dope) can be prepared through a common process by means of a common apparatus in the normal solvent cast method. In the normal process, a halogenated hydrocarbon (particularly, methylene chloride) is preferably used as the solvent.

The amount of the polymer in the solution is preferably in the range of 10 to 40 wt.%, more preferably in the range of 10 to 30 wt.%. To the organic (main) solvent, additives described below may be optionally added.

The polymer and the organic solvent are mixed and stirred at room temperature (0 to 40°C) to prepare the solution. For preparing the concentrated solution, the preparation may be carried out at an elevated temperature under a high pressure. In that case, the polymer and the organic solvent are placed in a vessel resisting pressure. After the

vessel is sealed, the mixture is stirred under an increased pressure at an elevated temperature. The temperature is controlled so that it may be higher than the boiling point of the solvent at atmospheric pressure but so that the solvent may not boil. The temperature is normally in the range of 40°C or more, preferably in the range of 60 to 200°C, more preferably in the range of 80 to 110°C.

The components can be preliminary dispersed coarsely, and the coarse dispersion can be placed in the vessel. Otherwise, the components can also be introduced into the vessel in series. The vessel should be equipped with a stirring device. A pressure in the vessel can be formed by introducing an inert gas such as nitrogen gas into the vessel, or by heating and evaporating the solvent to increase the vapor pressure. Further, the components can be added to the vessel at a high pressure after the vessel is sealed.

The vessel is preferably heated from outside. For example, a jacket heater is preferably used. Otherwise, liquid heated with a plate-heater placed outside of the vessel may be circulated through a pipe wound around the vessel, to heat the whole vessel.

The mixture is preferably stirred with a propeller mixer provided in the vessel. The wing of the propeller preferably has a length reaching the inside wall of the vessel. Further, at the tip of the wing, a scratching mean is preferably provided to scratch and renew liquid attached on the inside wall.

In the vessel, various meters such as pressure gauge and thermometer may be provided. After the components are dissolved in the solvent in the vessel, the prepared dope may be cooled and then taken out of the vessel, or may be taken out and then cooled with a heat exchanger.

The solution (dope) can be prepared according to the cooling dissolution method.

At the first stage of the cooling dissolution method, the polymer is gradually added to the organic solvent and stirred at room temperature (-10 to 40°C). If two or more solvents are used, there is no restriction on the order of addition. For example, after the polymer is added into the main solvent, other solvents (e.g., alcohol as gelling solvent) may be used. Otherwise, in contrast, the polymer beforehand wetted with the gelling solvent may be added into the main solvent. If so, the polymer is homogeneously dissolved. The amount of the polymer in the mixture is preferably in the range of 10 to 40 wt.%, more preferably in the range of 10 to 30 wt.%. Various additives described below may be added in the mixture.

The prepared mixture is cooled to a temperature of -100 to -10°C, preferably -80 to -10°C, more preferably -50 to -20°C, most preferably -50 to -30°C. The cooling procedure can be carried out, for example, with dry ice-methanol bath (-75°C) or with cooled ethylene glycol solution (-30 to -20°C). Through the cooling procedure, the mixture is solidified. If cooled in a batch process, the mixture is getting viscous and hence the cooling efficiency is getting lowered as it is getting cooler. Therefore, it is preferred to used a dissolution pot that can be effectively cooled to the aimed temperature.

Otherwise, after swollen with the solvent, the polymer may be quickly transferred in a cooling apparatus at a predetermined temperature. The cooling rate is preferably as fast as possible. However, a theoretical upper limit of the cooling rate is 10,000°C per second, a technical upper limit is 1,000°C per second, and a practical upper limit is 100°C per second. The cooling rate means the change of temperature at the cooling step per the time taken to complete the cooling step. The change of temperature means the difference between the temperature at which the cooling step is started and the temperature at which the cooling step is completed.

The cooled mixture is then warmed to a temperature of 0 to 200°C, preferably 0 to 150°C, more preferably 0 to 120°C, most preferably 0 to 50°C. Through the warming procedure, the polymer is dissolved in the organic solvent. For warming, the mixture may be left at room temperature or may be heated in a warm bath.

Thus, a homogeneous solution can be prepared. If the polymer is not sufficiently dissolved, the cooling and warming procedures may be repeated. It can be judged by observation with the eyes whether the polymer is sufficiently dissolved or not.

In the process of cooling dissolution method, a sealed vessel is preferably used to prevent contamination of water, which may be caused by dew condensation at the cooling step. Further, the mixture may be cooled under a reduced pressure so that the time taken to complete the cooling step can be shortened, and hence a vessel resisting pressure is preferably used to conduct the procedures under a reduced pressure.

According to differential scanning calorimetric measurement (DSC), a 20 wt.% solution prepared by dissolving cellulose acetate (acetic acid content: 60.9%, viscosity average polymerization degree: 299) in methyl acetate through the cooling dissolution process has a pseudo-phase transition point between gel and sol at approx. 33°C. Below that temperature, the solution is in the form of homogeneous gel. The solution, therefore, must be kept at a temperature above the pseudo-phase transition point, preferably at a temperature higher than the pseudo-phase transition point by approx. 10°C. The pseudo-phase transition point depends upon various conditions such as the organic solvent, the acetic acid content, the viscosity average polymerization degree and the concentration of cellulose acetate.

The polymer film is made from the prepared polymer solution (dope) according to the solvent cast method. The aforementioned retardation-increasing agent is preferably added to the dope.

The dope is cast on a drum or a band, and the solvent is evaporated to form a film. The solid content of the

dope is preferably controlled in the range of 10 to 40% (preferably 18 to 35%). The surface of the drum or band is preferably beforehand polished to be a mirror. The casting and drying steps of the solvent cast method are described in U.S. Patent Nos. 2,336,310, 2,367,603, 2,492,078, 2,492,977, 2,492,978, 2,607,704, 2,739,069, 2,739,070, British Patent Nos. 640,731, 736,892, Japanese Patent Publication Nos. 45(1970)-4554, 49(1974)-5614, Japanese Patent Provisional Publication Nos. 60(1985)-176834, 60(1985)-203430 and 62(1987)-115035.

The surface temperature of the drum or band is preferably 10°C or below. After cast on the drum or band, the dope is blown with air for 2 seconds or more to dry. The formed film is then peeled, and blown with hot air whose temperature is successively changed from 100°C to 160°C in order to evaporate remaining solvent. This procedure is described in Japanese Patent Publication No. 5(1993)-17844. The procedure can shorten the time taken to complete the steps of cooling to peeling. For performing the procedure, the cast dope must gel at the surface temperature of the drum or band.

The prepared polymer solution may be cast on a smooth support (band or drum) to form a single layer film, but it is also possible to cast two or more polymer solutions (dopes) to prepare a layered polymer film.

In the case where two or more polymer solutions are cooperatively cast, two or more outlets are arranged at intervals along the running direction of the support (drum or band), and from each outlet each polymer solution is cast to form a layered film (Japanese Patent Provisional Publication Nos. 61(1986)-158414, 1(1989)-122419 and 11(1999)-198285). Otherwise, polymer solutions may be cast from two outlets to form a film (Japanese Patent Publication No. 60(1985)-27562, Japanese Patent Provisional Publication Nos. 61(1986)-94724, 61(1986)-947245, 61(1986)-104813, 61(1986)-158413 and 6(1994)-134933). Further, a flow of high-viscous polymer solution may be enclosed with a flow of low-viscous one to form a layered flow, and the high- and low-viscous solutions in the layered flow may be simultaneously extruded to produce a film (Japanese Patent Provisional Publication No. 56(1981)-162617).

Further, the method disclosed in Japanese Patent Publication No. 44(1969)-20235 may be adopted. In the disclosed process, a polymer solution is cast on the support from one outlet to form a film. After peeled from the support, the formed film is turned over and again placed on the support. On the thus appearing surface (having been in contact with the support), another polymer solution is cast from another outlet to form a film.

The used polymer solutions may be the same or different from each other. The function of each formed polymer layer can be given by each corresponding solution extruded from each outlet.

Other functional layers (e.g., adhesive layer, dye layer, antistatic layer, anti-halation layer, UV absorbing layer, polarizing layer) can be simultaneously formed together with the polymer layer in the above manner.

In a conventional single layer preparation process, it is necessary to extrude a polymer solution having such high concentration and such high viscosity that the resultant film may have the aimed thickness. Accordingly, that polymer solution is often so unstable that solid contents are deposited to cause troubles and to impair the planeness. To avoid the problem, plural concentrated polymer solutions are simultaneously extruded from outlets onto the support. The thus-prepared thick film has excellent planeness. In addition, since the concentrated solutions are used, the film is so easily dried that the productivity (particularly, production speed) can be improved.

A plasticizer can be added into the polymer solution to enhance mechanical strength of the resultant film or to shorten the time for drying. The plasticizer is, for example, a phosphate ester or a carbonate ester. Examples of the phosphate ester used as the plasticizer include triphenyl phosphate (TPP) and tricresyl phosphate (TCP). Typical examples of the carbonate ester are phthalate esters and citrate esters. Examples of the phthalate esters include dimethyl phthalate (DMP), diethyl phthalate (DEP), dibutyl phthalate (DBP), dioctyl phthalate (DOP), diphenyl phthalate (DPP) and diethylhexyl phthalate (DEHP). Examples of the citrate esters include triethyl o-acetylcitrate (OACTE) and tributyl o-acetylcitrate (OACTB). Besides the above, butyl oleate, methylacetyl ricinolate, dibutyl sebacate and various trimellitic esters are also usable. The plasticizers of phosphate esters (DMP, DEP, DBP, DOP, DPP, DEHP) are preferred. Particularly preferred are DEP and DPP.

The content of the plasticizer is preferably in the range of 0.1 to 25 wt.%, more preferably in the range of 1 to 20 wt.%, most preferably in the range of 3 to 15 wt.% based on the amount of the polymer.

Further, a deterioration inhibitor (e.g., oxidation inhibitor, peroxide decomposer, radical inhibitor, metal inactivating agent, oxygen scavenger, amine) may be incorporated in the polymer film. The deterioration inhibitor is described in Japanese Patent Provisional Publication Nos. 3(1991)-199201, 5(1993)-1907073, 5(1993)-194789, 5(1993)-271471 and 6(1994)-107854. The content of the deterioration inhibitor is preferably in the range of 0.01 to 1 wt.%, more preferably in the range of 0.01 to 0.2 wt.% based on the amount of the dope. If the content is less than 0.01 wt.%, the deterioration inhibitor gives little effect. If the content is more than 1 wt.%, the inhibitor often oozes out (bleeds out) to appear on the surface of the film. Particularly preferred deterioration inhibitors are butylated hydroxytoluene (BHT) and tribenzylamine (TBA).

(Stretching of polymer film)

The polymer film is stretched to control the retardation. The stretching (extension) ratio is preferably in the

range of 3 to 100%, more preferably in the range of 3 to 50%. In particular, the lateral stretching (extension) ratio is preferably in the range of 5 to 40%, more preferably in the range of 7 to 30% based on the original width.

If the stretching conditions are adequately controlled, the standard deviation of angle of slow axis in the optical compensatory sheet can be made smaller. There is no particular restriction on the stretching method, and for example the film can be stretched with a tenter. In that case, a film prepared by the solvent cast method is laterally stretched with a tenter, and is then kept under a certain condition to reduce the standard deviation. That procedure comprises the steps of stretching the film with a tenter to adjust the retardation and keeping the stretched film at a temperature near the glass transition temperature to make the standard deviation lower. If the film is kept at a temperature lower than the glass transition temperature, the standard deviation is increased.

If the film is longitudinally stretched between rolls, the distance between the rolls is preferably lengthened to reduce the standard deviation.

It is preferred to adequately adjust the following stretching conditions (a) to (f), particularly the conditions of preheating (b) and afterheating (d).

(a) Concentration of solvent remaining in the film before stretched

The film before stretched contains the remaining solvent preferably in an amount of 3 to 50 wt.%, more preferably in an amount of 5 to 40 wt.%, most preferably in an amount of 7 to 35 wt.%, based on the total weight of the polymer and the solvent. In the practical procedure, the film made from the dope is stretched with a tenter while it is insufficiently dried.

(b) Heating treatment before stretching (preheating)

The film is preferably subjected to a heating treatment before it is stretched. The temperature of the treatment is preferably in the range of 50 to 150°C, more preferably in the range of 60 to 140°C, most preferably in the range of 70 to 130°C. The time for the heating (preheating) treatment is preferably 5 seconds to 3 minutes, more preferably 10 seconds to 2 minutes, most preferably 15 seconds to 90 seconds.

(c) Stretching speed

After the preheating treatment, the film is stretched in the lateral (TD) direction. The stretching (extension) ratio is described above. The stretching speed is in the range of 5 to 300 %/minute, preferably in the range of 10 to 200 %/minute, further preferably in the range of 15 to 150 %/minute. This low stretching speed characterizes the present invention. In fact, a normal polymer film (for example, a polyester film) is conventionally stretched in a speed of 500 %/minute or more. The stretching procedure in the present invention is carried out at a temperature of 80 to 160°C, preferably 90 to 150°C, more preferably 100 to 145°C. In the stretching procedure, both ends of the film are preferably clipped with a tenter.

(d) Heating treatment after stretching (afterheating)

Immediately after the stretching procedure, the film is preferably subjected to another heating treatment (afterheating treatment) at a temperature of 90 to 150°C, more preferably 100 to 145°C, most preferably 110 to 140°C for 5 seconds to 3 minutes, preferably 10 seconds to 2 minutes, most preferably 15 seconds to 90 seconds. In a conventional stretching film-forming process, a stretched film is kept at 200°C or more. In contrast, it is a character of the present invention not to treat the film at such a high temperature.

(e) Cooling relaxation

The stretched film is then cooled to room temperature. While the film is being cooled, it is preferred to relax and let the film shrink laterally by 1 to 10% (more preferably 2 to 9%, further preferably 2 to 8%) based on the original width. The film is cooled at a speed of preferably 10 to 300°C/minute, more preferably 30 to 250°C, further preferably 50 to 200°C.

(f) Slitting the ends and reuse of the formed strips

Both ends of the film are then slit up, and the film is wound up. The formed strips are preferably dissolved again to reuse as the dope. The polymer thus dissolved again is preferably in an amount of 10 to 90%, more preferably in an amount of 20 to 80%, further preferably in an amount of 30 to 70%, based on the total amount of the polymer.

The stretched film has a width of preferably 0.5 to 3 m, more preferably 0.7 to 2.5 m, most preferably 0.9 to 2 m.
The thickness of the film is preferably in the range of 40 to 140 μm, more preferably in the range of 55 to 130 μm, most preferably in the range of 70 to 120 μm.
The length of the film in the form of a roll is preferably in the range of 300 to 6,000 m, more preferably in the range of 500 to 5,000 m, most preferably in the range of 1,000 to 4,000 m.
In winding up the film, at least one end of the film is preferably knurled. The width of the knurled area is preferably 3 to 50 mm, more preferably 5 to 30 mm. The height of the knurl is preferably 5 to 500 μm, more preferably 10 to 200 μm. For forming the knurl, the film is pressed either from one side or from both sides.

(Surface treatment of polymer film)

If designed to work as the transparent protective film of the polarizing plate, the polymer film is preferably subjected to a surface treatment.
Examples of the surface treatment include corona discharge treatment, glow discharge treatment, flame treatment, acid treatment, alkali treatment, and ultraviolet (UV) treatment. Acid treatment and alkali treatment are preferred, and alkali treatment is more preferred. If the polymer film is made of cellulose acetate, the acid or alkali treatment functions as a saponification treatment to the cellulose acetate.
As the solvent for the saponification liquid, water or an organic solvent is preferred. If the liquid is applied on the film, the solvent is preferably selected so that it may wet the surface well and may not make the surface rough to keep a preferable condition. Alcohols are particularly preferred, and particularly (mono)alcohols having 1 to 5 carbon atoms and glycol are preferred. Examples of the preferred alcohol include ethanol, propanol, isopropanol, butanol, isobutanol, t-butanol, and ethylene glycol. Isopropanol is most preferred. Other solvents can be used in combination with the alcohol. The solvent contains water in an amount of preferably 50 wt.% or less, more preferably 30 wt.% or less, most preferably 15 wt.% or less.
The saponification liquid may contain a surface active agent.
Alkali used in the saponification liquid is preferably a hydroxide of alkali metal. Particularly, NaOH and KOH are preferred. The pH value of the liquid is preferably 10 or more, more preferably 12 or more.
In the saponification treatment, the film is immersed in the saponification liquid (immersing method) or otherwise coated with the liquid (coating method). The coating is preferred to the immersing because the rolled film saponified by coating is more prevented from blocking than that saponified by immersing. Particularly when a cellulose acetate film is stretched or when a cellulose acetate film having a high acetyl-substitution degree at 6-position is used, the coating method remarkably prevents the film from blocking. The stretched film is apt to shrink while stored in the form of a roll, and accordingly the shrinking stress often makes the film rub together in the roll to cause blocking. On the other hand, the acetyl group at 6-position is easily eliminated in saponification, and the replacing hydroxyl often induces blocking. Therefore, the stretched film or the film having a high substitution degree at 6-position is liable to suffer from blocking. However, if the film is coated with the saponification liquid, the liquid stays on only the surface and hence saponifies the film weakly but enough. As a result, according to the coating method, the film is prevented from blocking. (If the immersing method is adopted, the liquid penetrates to the film so deeply that blocking occurs.)
As the coating method, known methods such as dip-coating, curtain-coating, extrusion-coating, bar-coating and E type-coating can be adopted.
The temperature for saponification is preferably in the range of 10 to 80°C, more preferably in the range of 15 to 60°C, most preferably in the range of 20 to 40°C. The time for saponification is preferably in the range of 1 second to 5 minutes, more preferably in the range of 2 seconds to 1 minute, most preferably in the range of 3 seconds to 30 seconds.
After the saponification treatment, the saponification liquid is washed away. The washing liquid is at a temperature of preferably 30 to 80°C, more preferably 35 to 70°C, most preferably 40 to 65°C. For washing away the saponification liquid, the film may be immersed in, sprayed or coated with the washing liquid. The washing liquid is preferably water, and more preferably pure water. A mixed solvent of water and other solvent may be used. In that case, the amount of other solvent is preferably 50 wt.% or less, more preferably 20 wt.% or less. Examples of other solvents include alcohols having 1 to 5 carbon atoms.
After washed, the film is dried at a temperature of preferably 40 to 200°C, more preferably 50 to 150°C, most preferably 60 to 120°C.
If an orientation layer is formed on the saponified surface, the coating for saponification and that for forming the orientation layer can be successively carried out. Since the production steps can be reduced, that is preferred.

(Orientation layer)

An orientation layer has a function for aligning discotic liquid crystal molecules in the optically anisotropic layer.

The orientation layer can be formed by rubbing treatment of an organic compound (preferably a polymer), oblique evaporation of an inorganic compound, formation of a micro groove layer, or stimulation of an organic compound (e.g., ω-tricosanoic acid, dioctadecylmethylammonium chloride, methyl stearate) according to a Langmuir-Blodgett method. Further, the aligning function of the orientation layer can be activated by applying an electric or magnetic field to the layer or irradiating the layer with light.

The orientation layer is preferably formed by rubbing a polymer. As the polymer for orientation layer, a polyvinyl alcohol is preferred and a denatured polyvinyl alcohol having a hydrophobic group is particularly preferred. Since a hydrophobic group has affinity with discotic liquid molecules, the denatured polyvinyl alcohol in which the hydrophobic group is introduced can evenly align the discotic liquid crystal molecules. The hydrophobic group is placed at the terminal of the main chain or at the side chain of polyvinyl alcohol.

The hydrophobic group is preferably an aliphatic group (preferably, alkyl group or alkenyl group) having 6 or more carbon atoms or an aromatic group.

If the hydrophobic group is placed at the terminal of the main chain, it is preferred to introduce a linking group between the terminal and the hydrophobic group. Examples of the linking group include -S-, $-C(CN)R^1-$, $-NR^2-$, - CS- and a combination thereof. In the above, each of the $R^1$ and $R^2$ is independently hydrogen or an alkyl group having 1 to 6 carbon atoms (preferably an alkyl group having 1 to 6 carbon atoms).

If the hydrophobic group is placed at the side chain, a part of acetyl ($-CO-CH_3$) in a vinyl acetate unit of polyvinyl alcohol is replaced with an acyl group ($-CO-R^3$) having 7 or more carbon atoms. In the above, the $R^3$ is an aliphatic group having 6 or more carbon atoms or an aromatic group.

Commercially available denatured polyvinyl alcohols (e.g., MP103, MP203, R1130, from Kuraray Co., Ltd.) may be used.

The (denatured) polyvinyl alcohol used in the invention has a saponification degree of preferably 80% or more and a polymerization degree of preferably 200 or more.

The rubbing treatment is performed by rubbing the surface of the layer with paper or cloth along a certain direction, to give the aligning function. Preferably, the layer is rubbed several times with cloth on which fibers having the same length and thickness are provided.

After discotic liquid crystal molecules in the optically anisotropic layer are once aligned, they can keep the alignment even if the orientation layer is removed. Therefore, the optical compensatory sheet does not need to comprise an orientation layer although the orientation layer is necessary for preparing the elliptically polarizing plate.

If the orientation layer is provided between the transparent support and the optically anisotropic layer, an undercoating layer (adhesive layer) is preferably provided between the transparent support and the orientation layer.

(Optically anisotropic layer)

The optically anisotropic layer is prepared from discotic liquid crystal molecules. A discotic liquid crystal molecule generally has optically negative uniaxiality. In the optical compensatory sheet of the invention, the angle between the disc plane and the transparent support (shown in Fig. 2) in each liquid crystal molecule preferably changes along the thickness (namely, the molecules are preferably oriented in hybrid alignment). The optic axis of discotic liquid crystal molecule is parallel to the normal of the disc plane. The discotic liquid crystal molecule gives higher refractive index in the disc plane than along the optic axis.

For forming the optically anisotropic layer, the discotic liquid crystal molecules are preferably aligned with the aforementioned orientation layer and fixed with the alignment maintained. The molecules are preferably fixed through a polymerization reaction.

In the optically anisotropic layer, there is no direction in which the retardation is 0. In other wards, the optically anisotropic layer has the minimum retardation value of larger than 0. The Re and Rth retardation values defined by the following formulas (III) and (IV) are preferably in the ranges of 10 to 100 nm and 40 to 200 nm, respectively. Further, the discotic liquid crystal molecules preferably have an average inclined angle of 20 to 50°.

(III) $Re = (nx-ny) \times d$

(IV) $Rth = \{(n2+n3)/2-n1\} \times d$

In the formula (III), nx is a refractive index along the slow axis in the plane of optically anisotropic layer, ny is a refractive index along the fast axis in the layer plane, and d is the thickness of optically anisotropic layer in terms of nm.

In the formula (IV), n1 is the minimum principal value of refractive index when the optically anisotropic layer is regarded as an index ellipsoid, n2 and n3 are other principal values of the optically anisotropic layer, and d is the thickness of optically anisotropic layer in terms of nm.

The discotic liquid crystal molecule is described in various documents (C. Destrade et al, Mol. Crysr. Liq. Cryst., vol. 71, page 111 (1981); Japan Chemical Society, Quarterly Chemical Review (written in Japanese), chapter

5 and chapter 10, section 2 (1994); B. Kohne et al., Angew. Chem. Soc. Chem. Comm., page 1794 (1985); and J. Zhang et al., J. Am. Chem. Soc., vol. 116, page 2655 (1994)). The polymerization reaction of the discotic liquid crystal molecule is described in Japanese Patent Provisional Publication No. 8(1996)-27284.

For fixing the discotic liquid crystal molecules, a polymerizable group should be bound to a discotic core of the molecule to cause the polymerization reaction. However, if the polymerizable group is directly bound to the discotic core, it is difficult to keep the alignment at the polymerization reaction. Therefore, a linking group is introduced between the discotic core and the polymerizable group. Accordingly, the discotic compound having a polymerizable group preferably is a compound represented by the following formula (V).

$$\text{(V)} \qquad D(\text{-}L\text{-}Q)_n$$

in which D is a discotic core; L is a divalent linking group; Q is a polymerizable group; and n is an integer of 4 to 12.

Examples of the discotic cores (D) are shown below. In the examples, LQ (or QL) means the combination of the divalent linking group (L) and the polymerizable group (Q).

(D1)

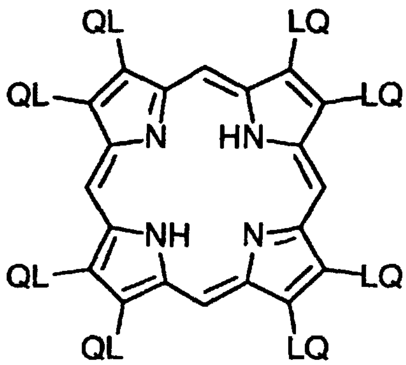

(D2)

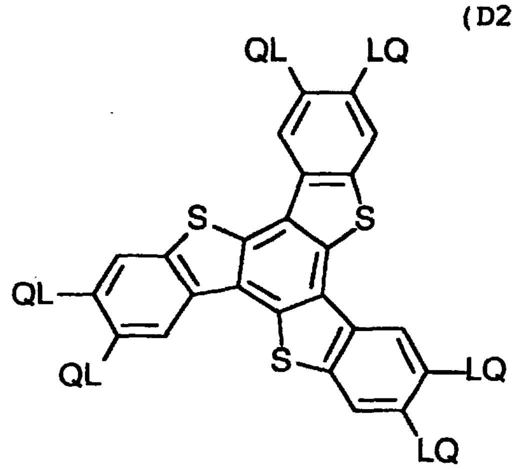

(D3)

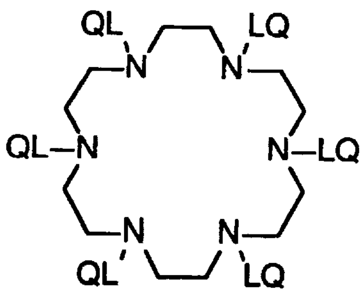

(D4)

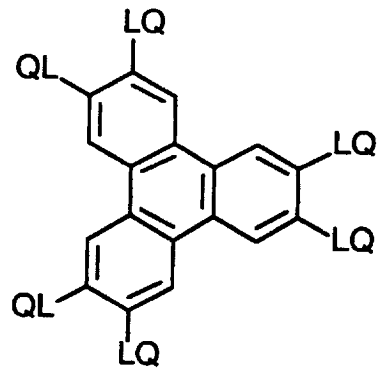

(D5)

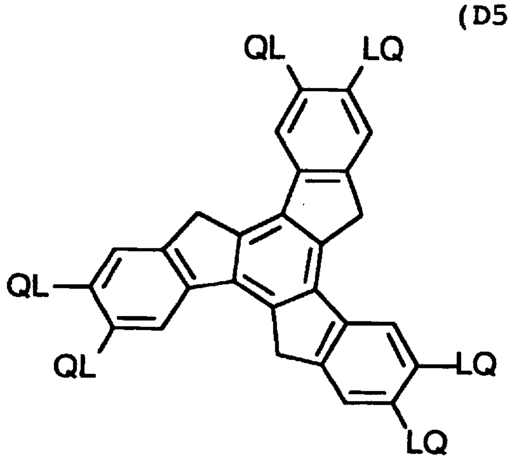

(D6)

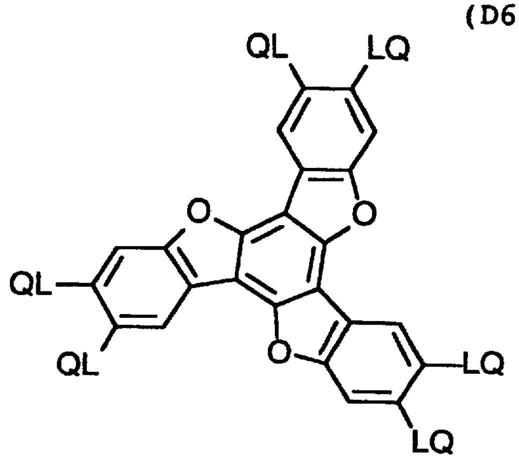

(D7)

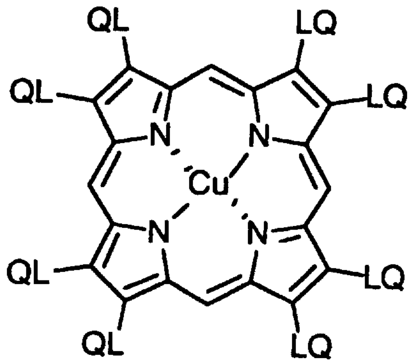

(D8)

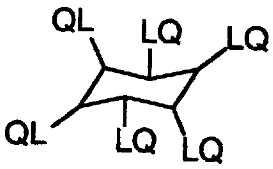

(D9)

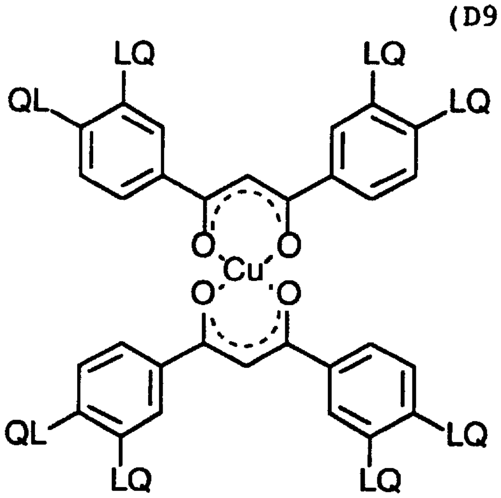

(D10)

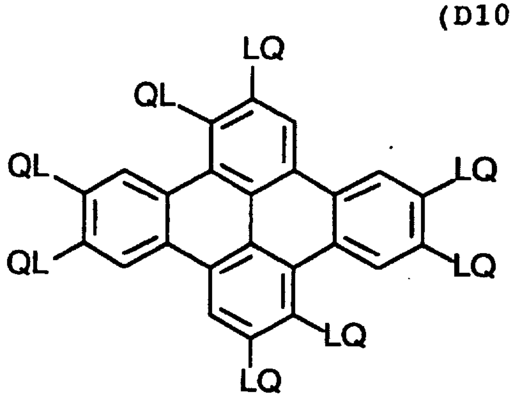

(D11)

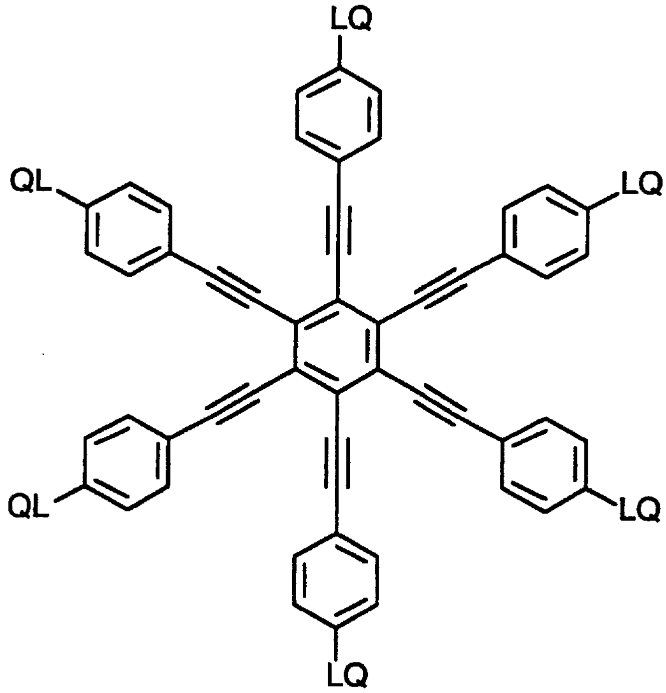

(D12)

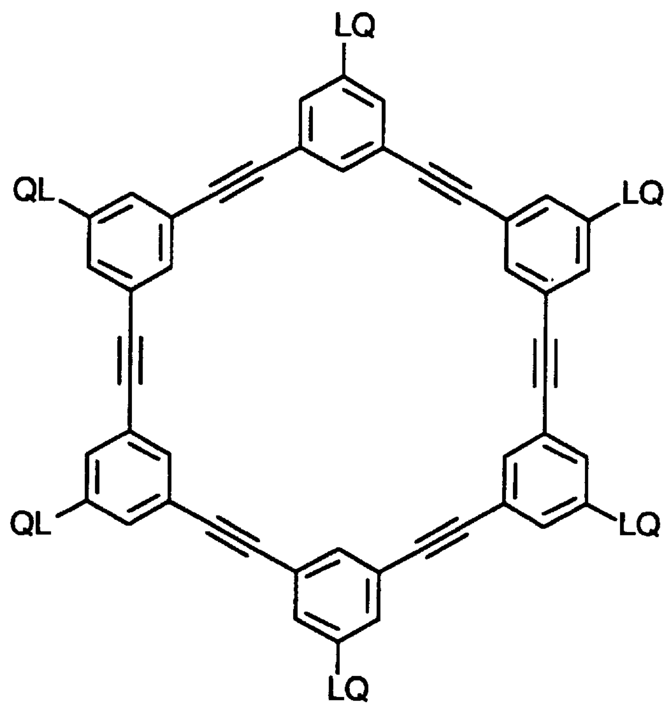

(D13)

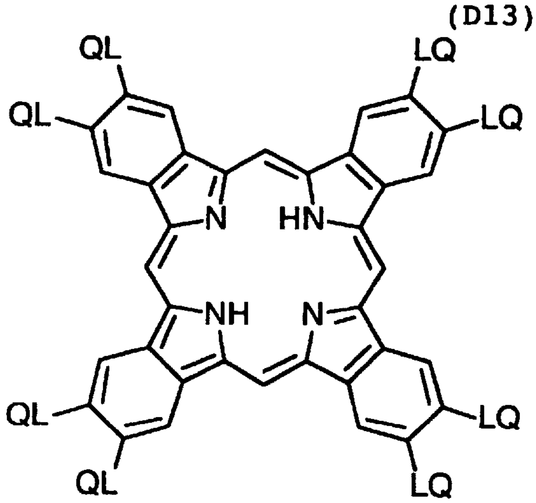

(D14)

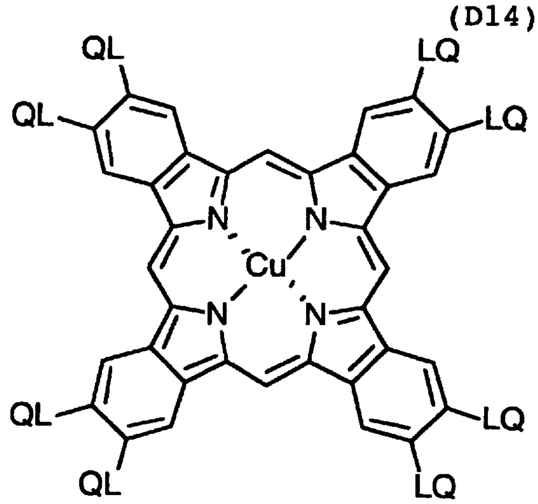

(D15)

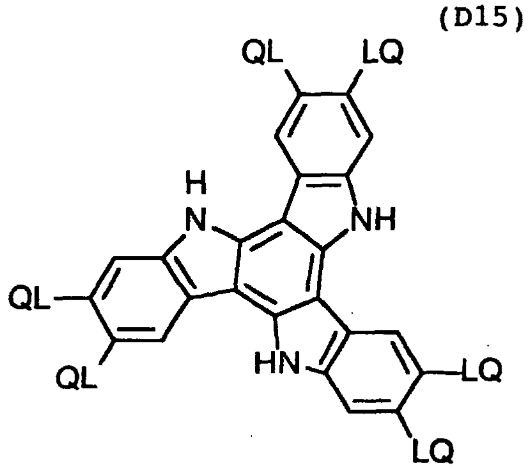

In the formula (V), the divalent linking group (L) is preferably selected from the group consisting of an alkylene group, an alkenylene group, an arylene group, -CO-, -NH-, -O-, -S- and combinations thereof. The L is more preferably a divalent linking group comprising at least two divalent groups selected from the group consisting of an alkylene group, an arylene group, -CO-, -NH-, -O- and -S-. The L more preferably is a divalent linking group comprising at least two divalent groups selected from the group consisting of an alkylene group, an arylene group, -CO- and -O-. The alkylene group preferably has 1 to 12 carbon atoms. The alkenylene group preferably has 2 to 12 carbon atoms. The arylene group preferably has 6 to 10 carbon atoms.

Examples of the divalent linking groups (L) are shown below. In the examples, the left side is attached to the discotic core (D), and the right side is attached to the polymerizable group (Q). The AL means an alkylene group or an alkenylene group. The AR means an arylene group. The alkylene group, the alkenylene group and the arylene group may have a substituent group (e.g., an alkyl group).

L1: -AL-CO-O-AL-
L2: -AL-CO-O-AL-O-
L3: -AL-CO-O-AL-O-AL-
L4: -AL-CO-O-AL-O-CO-
L5: -CO-AR-O-AL-
L6: -CO-AR-O-AL-O-
L7: -CO-AR-O-AL-O-CO-
L8: -CO-NH-AL-
L9: -NH-AL-O-

L10: -NH-AL-O-CO-
L11: -O-AL-
L12: -O-AL-O-
L13: -O-AL-O-CO-
L14: -O-AL-O-CO-NH-AL-
L15: -O-AL-S-AL-
L16: -O-CO-AR-O-AL-CO-
L17: -O-CO-AR-O-AL-O-CO-
L18: -O-CO-AR-O-AL-O-AL-O-CO-
L19: -O-CO-AR-O-AL-O-AL-O-AL-O-CO-
L20: -S-AL-
L21: -S-AL-O-
L22: -S-AL-O-CO-
L23: -S-AL-S-AL-
L24: -S-AR-AL-

The polymerizable group (Q) in the formula (V) is selected according to the kind of polymerization reaction.
Examples of the polymerizable group (Q) are shown below.

(Q1) $-CH=CH_2$

(Q2) $-CH=CH-CH_3$

(Q3) $-CH=CH-C_2H_5$

(Q4) $-CH=CH-n\text{-}C_3H_7$

(Q5)
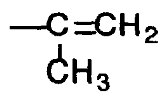

(Q6)
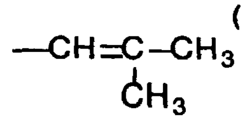

(Q7) $-C\equiv CH$

(Q8)
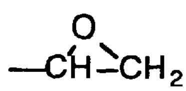

(Q9)
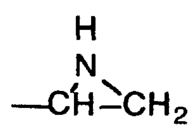

(Q10) $-SH$

(Q11) $-CHO$

(Q12) $-OH$

(Q13) $-CO_2H$

(Q14) $-N=C=O$

(Q15) $-NH_2$

(Q16) $-SO_3H$

(Q17) $-N=C=S$

The polymerizable group (Q) preferably is an unsaturated polymerizable group (Q1 to Q7) or an epoxy group (Q8), more preferably is an unsaturated polymerizable group, and most preferably is an ethylenically unsaturated group (Q1 to Q6).
In the formula (V), n is an integer of 4 to 12, which is determined according to the structure of the discotic core (D). The 4 to 12 combinations of L and Q may be different from each other. However, the combinations are

preferably identical.

The optically anisotropic layer can be prepared by coating the orientation layer with a coating solution containing the discotic liquid crystal molecules and, if needed, a photo-polymerization initiator and other optical components.

The optically anisotropic layer has a thickness of preferably 0.5 to 100 μm, more preferably 0.5 to 30 μm.

The aligned liquid crystal molecules can be fixed with the alignment maintained. The liquid crystal molecules are fixed preferably by a polymerization reaction. The polymerization reaction can be classified into a thermal reaction with a thermal polymerization initiator and a photoreaction with a photo polymerization initiator. A photo polymerization reaction is preferred.

Examples of the photo polymerization initiators include α-carbonyl compounds (described in US Patent Nos. 2,367,661, 2,367,670), acyloin ethers (described in US Patent No. 2,448,828), α-hydrocarbon substituted acyloin compounds (described in US Patent No. 2,722,512), polycyclic quinone compounds (described in US Patent Nos. 2,951,758, 3,046,127), combinations of triarylimidazoles and p-aminophenyl ketones (described in US Patent No. 3,549,367), acridine or phenazine compounds (described in Japanese Patent Provisional Publication No. 60(1985)-105667 and US Patent No. 4,239,850) and oxadiazole compounds (described in US Patent No. 4,212,970).

The amount of the photo polymerization initiator is preferably in the range of 0.01 to 20 wt.%, and more preferably in the range of 0.5 to 5 wt.% based on the solid content of the coating solution.

The light irradiation for the photo polymerization is preferably conducted with ultraviolet rays.

The exposure energy is preferably in the range of 20 to 5,000 $mJ/cm^2$, more preferably in the range of 100 to 800 $mJ/cm^2$. The light irradiation can be conducted while the layer is heated to accelerate the photo polymerization reaction.

The protective layer may be provided on the optically anisotropic layer.

(Polarizing Plate)

The polarizing plate comprises two transparent protective films and a polarizing membrane provided between the films. One of the protective films may be the optical compensatory sheet of the invention, and the other may be a normal cellulose acetate film.

Examples of the polarizing membrane include an iodine polarizing membrane, a polyene polarizing membrane and a dichromatic dye polarizing membrane. The iodine polarizing membrane and the dye polarizing membrane are generally prepared from polyvinyl alcohol films.

The polarizing membrane and the transparent support (polymer film) of the optical compensatory sheet are preferably placed so that the slow axis of the support may be at an angle of 3° or less to the transmission axis of the membrane. The angle is more preferably 2° or less, further preferably 1° or less.

(Liquid crystal display)

The optical compensatory sheet of the invention is advantageously used in a liquid crystal display, especially in a liquid crystal display of transmission type.

A liquid crystal display of transmission type comprises a pair of polarizing plates and a liquid crystal cell placed between them. The liquid crystal cell comprises a pair of electrode substrates and liquid crystal provided between them.

The optical compensatory sheet is placed between the cell and one or each of the polarizing plates.

Each polarizing plate comprises a pair of transparent protective films and a polarizing membrane placed between them. In one or each of the two polarizing plates, the optical compensatory sheet can be used as a transparent protective film placed between the liquid crystal cell and the polarizing membrane.

The optical compensatory sheet of the invention works most effectively when used in combination with a liquid crystal cell of bend alignment mode.

In the liquid crystal cell of bend alignment mode, liquid crystal molecules placed in the central area may be oriented in twisted alignment.

In the liquid crystal cell of bend alignment mode, the product ($\Delta n \times d$) of the refractive anisotropy of liquid crystal ($\Delta n$) and the thickness of liquid crystal layer (d) is preferably in the range of 100 to 2,000 nm, more preferably in the range of 150 to 1,700 nm, most preferably in the range of 500 to 1,500 nm. If the product is in the above ranges, both high brightness and a wide viewing angle are realized.

The liquid crystal cell of bend alignment mode can be used in either normally white (NW) mode or normally black (NB) mode.

It is also preferred to use the optical compensatory sheet of the invention in combination with a liquid crystal cell of VA (including n-ASM) mode or TN mode.

In a liquid crystal cell of VA mode, rod-like liquid crystal molecules are essentially vertically aligned while

voltage is not applied.

The liquid crystal cell of VA mode include some types: (1) a liquid crystal cell of VA mode in a narrow sense (described in Japanese Patent Provisional Publication No. 2(1990)-176625 and Japanese Patent Publication No. 7 (1995)-69536), in which rod-like liquid crystal molecules are essentially vertically aligned while voltage is not applied, and the molecules are essentially horizontally aligned while voltage is applied; (2) liquid crystal cells of MVA mode (described in SID97, Digest of tech. Papers, 28(1997), 845; SID99, Digest of tech. Papers, 30(1999), 206; and Japanese Patent Provisional Publication No. 11(1999)-258605), SURVAIVAL mode (described in "Monthly Display (Japanese)", vol. 6(1999), No. 3, 14), PVA mode (described in Asia Display 98, Proc. of the 18th Inter. Display res. Conf. (1998), 383), Para-A mode (described in LCD/PDP international '99), DDVA mode (described in SID 98, Digest of tech. Papers, 29(1998), 838), EOC mode (described in SID 98, Digest of tech. Papers, 29(1998), 319), PSHA mode (described in SID 98, Digest of tech. Papers, 29(1998), 1081), RFFMH mode (described in Asia Display 98, Proc. of the 18th Inter. Display res. Conf. (1998), 375), and HMD mode (described in SID 98, Digest of tech. Papers, 29(1998), 702), in which the VA mode is modified to be multi-domain type so as to enlarge the viewing angle; and (3) a liquid crystal cell of n-ASM mode (described in IWD '98, Proc. of the 5th Inter. Display Workshop (1998), 143), in which rod-like liquid crystal molecules are essentially vertically aligned while voltage is not applied, and the molecules are essentially oriented in twisted multi-domain alignment while voltage is applied.

In a liquid crystal cell of TN mode, rod-like liquid crystal molecules are essentially horizontally aligned while voltage is not applied, and oriented in a twisted alignment with a twisted angle of 60 to 120°. The liquid crystal cell of TN mode is widely used in color TFT liquid crystal displays, and hence is described in many publications.

[Example 1]

(Preparation of cellulose acetate solution)

The following components were placed in a mixing tank, heated and stirred to dissolve, to prepare a cellulose acetate solution.

| Cellulose acetate solution | |
|---|---|
| Cellulose acetate (acetic acid content: 60.9 %) | 100 weight parts |
| Triphenyl phosphate (plasticizer) | 7.8 weight parts |
| Biphenyldiphenyl phosphate (plasticizer) | 3.9 weight parts |
| Methylene chloride (first solvent) | 336 weight parts |
| Methanol (second solvent) | 29 weight parts |

(Preparation of retardation-increasing agent solution)

In another mixing tank, 16 weight parts of the following retardation-increasing agent, 80 weight parts of methylene chloride and 20 weight parts of methanol were placed, heated and stirred, to prepare a retardation-increasing agent solution.

Retardation-increasing agent

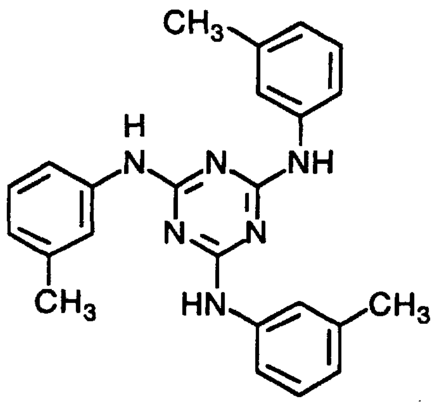

(Preparation of cellulose acetate film)

The cellulose acetate solution (477 weight parts) and the retardation-increasing agent solution (52 weight parts) were mixed and stirred well to prepare a dope. The prepared dope contained the retardation-increasing agent in the amount of 6.7 weight parts based on 100 weight parts of cellulose acetate.
The dope was cast on a band by means of a band-casting machine. When the solvent remaining in the formed film reached 50 wt.%, the film was peeled from the band. After dried until the remaining solvent reached 40 wt.%, the film was laterally stretched by 17% with a tenter at 130°C and then held to keep the stretched width for 30 seconds at 130°C. The film was then released from the tenter. Thus, a cellulose acetate film was prepared.

(Measurement of optical characters)

The optical characters of the prepared cellulose acetate film were measured at the wavelength of 550 nm by means of an ellipsometer (M-150, JASCO COORPORATION), to find the Re and Rth values. The angle of slow axis was measured by means of an optical birefringence analyzer (KO-BRA-21ADH, Oji Scientific Instrument Co., Ltd.) at ten points laterally arranged at equal intervals, and averaged. The standard deviation of the measured angles was also obtained.
The results are set forth in Table 1.

(Measurement of thermal conductivity)

The film was placed between a copper heater case and a copper plate in TO-3 type hater, and was pressed by 10%. The film was then kept for 4 minutes while the copper heater case was electrified at 5 W, and the temperature difference between the case and the plate was measured. From the obtained date, the thermal conductivity was calculated according to the formula:

$$\text{thermal conductivity } \{W/(m\cdot K)\} = \{\text{electric power (W)} \times \text{thickness (m)}\}/\{\text{temperature difference (K)} \times \text{measured area } (m^2)\}.$$

The results are set forth in Table 1.

(Saponification of cellulose acetate film)

The cellulose acetate film was immersed in 1.5 N aqueous NaOH solution at 55°C for 2 minutes. The film was then washed with water in a washing bath at room temperature, and neutralized with 0.1 N sulfuric acid at 30°C.

After washed again with water in the washing bath at room temperature, the film was dried with blowing air at 100°C. Thus, the surfaces of the cellulose acetate film were saponified.

(Formation of orientation layer)

On one surface of the saponified cellulose acetate film (transparent support), the following coating solution was then applied in the amount of 24 ml/$m^2$ by means of a wire bar coater of #14. The applied solution was dried with hot air at 60°C for 60 seconds, and then further dried with hot air at 90°C for 150 seconds. The formed layer was subjected to the rubbing treatment in which the rubbing direction was at the angle of 45° to the stretching direction (which is almost parallel to the slow axis) of the polymer film, to form an orientation layer.

| Coating solution for orientation layer | |
|---|---|
| The following denatured polyvinyl alcohol | 20 weight parts |
| Water | 360 weight parts |
| Methanol | 120 weight parts |
| Glutaric aldehyde (crosslinking agent) | 1.0 weight part |

(Denatured polyvinyl alcohol)

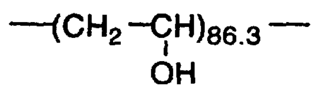

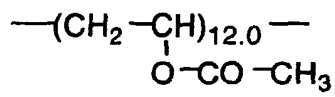

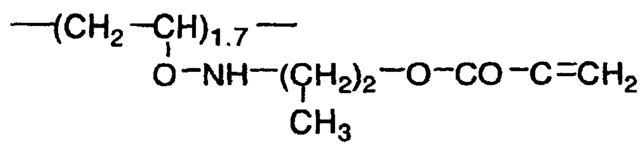

(Formation of optically anisotropic layer)

To prepare another coating solution, 41.01 g of the following discotic liquid crystal compound, 4.06 g of ethylene oxide denatured trimethlolpropanetriacrylate (V#360, Osaka Organic Chemicals Co., Ltd.), 0.90 g of cellulose acetate butyrate (CAB-551-0.2, Eastman Chemical), 0.23 g of cellulose acetate butyrate (CAB-531-1, Eastman Chemical), 1.35 g of a photopolymerization initiator (Irgacure 907, Ciba-Geigy) and 0.45 g of a sensitizer (Kayacure DETX, Nippon Kayaku Co., Ltd.) were dissolved in 102 g of methyl ethyl ketone. The coating solution was then applied on the orientation layer by means of a wire bar coater of #3. The thus-treated film was fixed on a metal frame, and maintained in a thermostat at 130°C for 2 minutes to align the molecules of the discotic liquid crystal compound. The film was then irradiated at 130°C for 1 minute with ultraviolet rays emitted from a high-pressure mercury lamp of 120 W/cm, to polymerize the discotic molecules. The film was cooled to room temperature to form an optically anisotropic layer.

Thus, an optical compensatory sheet was prepared. The optical characters and the thermal conductivity of the prepared sheet were measured in the same manners as the cellulose acetate film. Further, the average inclined angle (β) of discotic liquid crystal molecules was measured. The results are set forth in Table 2.

Discotic liquid crystal compound

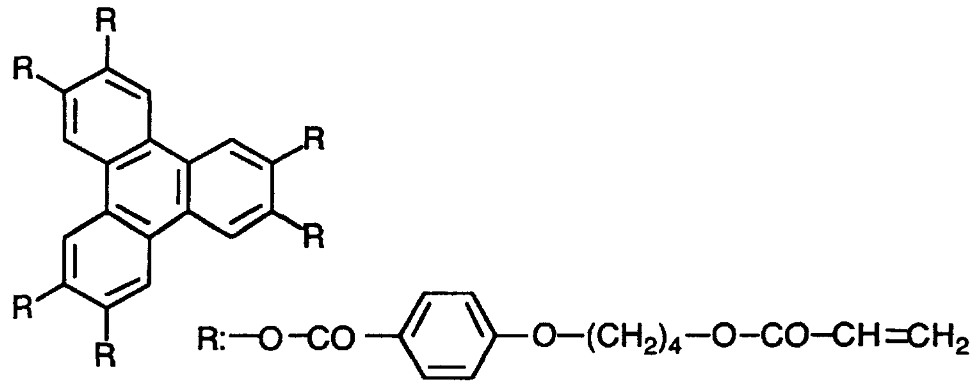

(Preparation of elliptically polarizing plate)

Iodine was adsorbed on a stretched polyvinyl alcohol film to prepare a polarizing membrane. On one surface of the membrane, the prepared optical compensatory sheet was laminated with polyvinyl adhesive so that the membrane might be on the side of the transparent support of the sheet. The membrane and the sheet were positioned so that the transmission axis of the membrane might be parallel to the slow axis of the support. The angle between the transmission axis and the average direction of the slow axis was 0.3°.

A commercially available triacetyl cellulose film (Fujitac TD80UF, Fuji Photo Film Co., Ltd.) was saponified in the aforementioned manner, and laminated on the other surface (on which the optical compensatory sheet was not laminated) of the polarizing membrane with polyvinyl adhesive. Thus, an elliptically polarizing plate was prepared.

(Preparation of liquid crystal cell of bend alignment mode)

On a glass plate having an ITO electrode, an orientation film of polyimide was provided and subjected to a rubbing treatment. This procedure was repeated to prepare two substrates, and the substrates were arranged face-to-face so that the rubbing directions might be parallel and that the gap might be 6 μm. Between them, a liquid crystal having Δn of 0.1396 (ZLI1132, Merck & Co., Inc.) was introduced to prepare a liquid crystal cell of bend alignment.

(Preparation of liquid crystal display)

Two elliptically polarizing plates prepared above were laminated on the liquid crystal cell so that the cell might be between the plates. The plates were arranged so that the optically anisotropic layer in each plate might face to the cell substrate and that the rubbing directions of the cell and the optically anisotropic layer might be anti-parallel.

Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward (perpendicularly to the rubbing direction of the cell). Also at the point where the front contrast ratio was the smallest, the horizontal viewing angle was measured.

The results are set forth in Table 3.

[Example 2]

(Preparation of cellulose acetate film)

The cellulose acetate solution prepared in Example 1 (477 weight parts) and the retardation-increasing agent solution prepared in Example 1 (21 weight parts) were mixed and stirred well to prepare a dope. The prepared dope contained the retardation-increasing agent in the amount of 2.8 weight parts based on 100 weight parts of cellulose acetate.

The dope was cast on a band by means of a band-casting machine. When the solvent remaining in the formed

film reached 50 wt.%, the film was peeled from the band. After dried until the remaining solvent reached 40 wt.%, the film was laterally stretched by 20% with a tenter at 130°C and then held to keep the stretched width for 30 seconds at 130°C. The film was then released from the tenter. Thus, a cellulose acetate film was prepared.

(Measurement of optical characters and thermal conductivity)

The optical characters and the thermal conductivity of the prepared cellulose acetate film were measured in the same manner as in Example 1.
The results are set forth in Table 1.

(Saponification of cellulose acetate film)

One surface of the cellulose acetate film was coated with 1.5 N isopropyl alcohol solution of KOH in the amount of 25 ml/m$^2$, and dried at 25°C for 5 seconds. The film was then washed with flowing water for 10 seconds, and blown with air at 25°C to dry. Thus, only one surface of the cellulose acetate film was saponified.

(Formation of orientation layer and optically anisotropic layer)

On the saponified surface of the cellulose acetate film, an orientation layer and an optically anisotropic layer were formed in the same manners in Example 1.
Thus, an optical compensatory sheet was prepared. The optical characters and the thermal conductivity of the prepared sheet were measured in the same manners as those of the cellulose acetate film. Further, the average inclined angle (β) of discotic molecules was measured. The results are set forth in Table 2.

(Preparation of elliptically polarizing plate)

Iodine was adsorbed on a stretched polyvinyl alcohol film to prepare a polarizing membrane. On one surface of the membrane, the saponified cellulose acetate film was laminated with polyvinyl adhesive so that the film might be the inner transparent protective film and that the saponified surface might face to the membrane.
A commercially available triacetyl cellulose film (Fujitac TD80UF, Fuji Photo Film Co., Ltd.) was saponified in the aforementioned manner, and laminated with polyvinyl adhesive to be the outer transparent protective film on the other surface of the polarizing membrane.
The optical compensatory sheet was then laminated on the inner protective film with polyvinyl adhesive, to prepare an elliptically polarizing plate.
The slow axis of the inner protective film, the slow axis of the transparent support and the transmission axis of the polarizing membrane were placed parallel to each other. As a result, the angle between the transmission axis and the average direction of the slow axes of the support and the protective film was 0.4°.

(Preparation of liquid crystal display)

The procedure of Example 1 was repeated except for using the above-prepared elliptically polarizing plate, to prepare a liquid crystal display.
Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward (perpendicularly to the rubbing direction of the cell). Also at the point where the front contrast ratio was the smallest, the horizontal viewing angle was measured.
The results are set forth in Table 3.

[Example 3]

(Preparation of cellulose acetate solution)

The following components were placed in a mixing tank, heated and stirred to dissolve, to prepare a cellulose acetate solution.

| Cellulose acetate solution | |
|---|---|
| Cellulose acetate (acetic acid content: 60.9 %) | 100 weight parts |
| Triphenyl phosphate (plasticizer) | 7.8 weight parts |
| Biphenyldiphenyl phosphate (plasticizer) | 3.9 weight parts |
| Methylene chloride (first solvent) | 300 weight parts |
| Methanol (second solvent) | 54 weight parts |
| 1-Butanol | 11 weight parts |

(Preparation of retardation-increasing agent solution)

The following components were placed in another mixing tank, heated and stirred to dissolve, to prepare a retardation-increasing agent solution.

| Retardation-increasing agent solution | |
|---|---|
| 2-Hydroxy-4-benzyloxybenzophenone (retardation-increasing agent) | 12 weight parts |
| 2,4-Benzyloxybenzophenone (retardation-increasing agent) | 4 weight parts |
| Methylene chloride (first solvent) | 80 weight parts |
| Methanol (second solvent) | 20 weight parts |

(Preparation of cellulose acetate film)

The cellulose acetate solution (487 weight parts) and the retardation-increasing agent solution (25 weight parts) were mixed and stirred well to prepare a dope. The prepared dope contained the retardation-increasing agent in the amount of 3.2 weight parts based on 100 weight parts of cellulose acetate.

The dope was cast on a drum cooled at 0°C. When the solvent remaining in the formed film reached 70 wt. %, the film was peeled from the drum. Both ends of the film were fixed with pin-tenters, and the film was dried. The film was longitudinally stretched at 140°C between rolls placed at the interval of 2 m, to produce a cellulose acetate film having 102 μm thickness.

(Formation of undercoating layer)

The coating solution consisting of the following components was applied on the above-prepared cellulose acetate film in the amount of 28 $ml/m^2$, and dried to form an undercoating gelatin layer of 0.1 μm thickness.

| Coating solution for undercoating layer | |
|---|---|
| Gelatin | 0.542 weight part |
| Salicylic acid | 0.160 weight part |
| Acetone (first solvent) | 39.1 weight parts |
| Methanol (second solvent) | 15.8 weight parts |
| Methylene chloride (third solvent) | 40.6 weight parts |
| Water (fourth solvent) | 1.2 weight parts |

(Formation of overcoating layer)

The coating solution consisting of the following components was applied on the undercoating layer in the amount of 7 $ml/m^2$, and dried to form an overcoating layer.

| Coating solution for overcoating layer | |
|---|---|
| The following anionic copolymer | 0.079 weight part |
| Monoethyl citrate | 1.01 weight parts |
| Acetone (first solvent) | 20 weight parts |
| Methanol (second solvent) | 87.7 weight parts |

(continued)

| Coating solution for overcoating layer | |
|---|---|
| Water (third solvent) | 4.05 weight parts |

(Anionic copolymer)

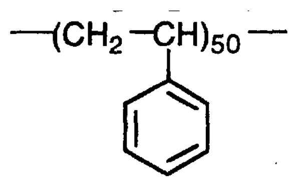

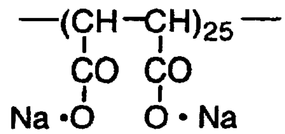

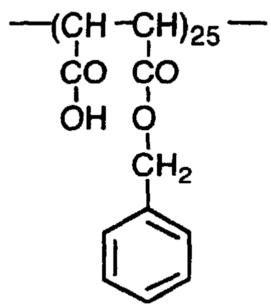

(Formation of backing layer)

The coating solution consisting of the following components was applied on the opposite surface (on which the undercoating layer was not provided) of the film in the amount of 25 ml/$m^2$, and dried to form a backing layer.

| Coating solution for backing layer | |
|---|---|
| Cellulose acetate (acetic acid content: 55 %) | 0.656 weight part |
| Silica particles (mean particle size: 1 μm, matting agent) | 0.065 weight part |
| Acetone (first solvent) | 67.9 weight parts |
| Methanol (second solvent) | 10.4 weight parts |

(Measurement of optical characters and thermal conductivity)

The optical characters and the thermal conductivity of the prepared transparent support were measured in the same manner as in Example 1.

The results are set forth in Table 1.

(Formation of orientation layer and optically anisotropic layer)

On the overcoating layer of the transparent support, an orientation layer and an optically anisotropic layer were formed in the same manners in Example 1.

Thus, an optical compensatory sheet was prepared. The optical characters and the thermal conductivity of

the prepared sheet were measured in the same manners as those of the cellulose acetate film. Further, the average inclined angle (β) of discotic molecules was measured. The results are set forth in Table 2.

(Preparation of elliptically polarizing plate)

On one surface of a commercially available polarizing plate (HLC2-5618HCS, Sunritz Corporation), the cellulose acetate film having the undercoating layer and the backing layer was laminated with an acrylic adhesive to use as an inner transparent film.
The optical compensatory sheet was laminated on the inner transparent film so that the transparent support of the sheet might be in contact with the transparent film, to prepare an elliptically polarizing plate.
The slow axis of the inner protective film, the slow axis of the transparent support and the transmission axis of the polarizing membrane were placed parallel to each other. As a result, the angle between the transmission axis and the average direction of the slow axes of the support and the protective film was 0.5°.

(Preparation of liquid crystal display)

The procedure of Example 1 was repeated except for using the above-prepared elliptically polarizing plate, to prepare a liquid crystal display.
Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward (perpendicularly to the rubbing direction of the cell). Also at the point where the front contrast ratio was the smallest, the horizontal viewing angle was measured.
The results are set forth in Table 3.

[Example 4]

To the mixed solvent shown below, the following additives were dissolved and then powder of cellulose triacetate (mean particle size: 2 mm) was gradually added with stirring. Thus, the following cellulose acetate solution was prepared.

| Cellulose acetate solution | |
|---|---|
| Cellulose acetate (acetic acid content: 60.5 %) | 100 weight parts |
| Triphenyl phosphate (plasticizer) | 6.8 weight parts |
| Biphenyldiphenyl phosphate (plasticizer) | 4.9 weight parts |
| Methyl acetate (first solvent) | 240 weight parts |
| Cyclohexanone (second solvent) | 100 weight parts |
| Methanol (third solvent) | 25 weight parts |
| Ethanol (fourth solvent) | 25 weight parts |
| Silica (particle size: 20 nm) | 0.5 weight part |
| Retardation-increasing agent used in Example 1 | 6.7 weight parts |

After the cellulose triacetate was added, the mixture was left at 25°C for 3 hours. The obtained inhomogeneous gel was cooled at -70°C for 6 hours, and then heated to 50°C and stirred to obtain a solution.
From the obtained solution, a cellulose acetate film was prepared in the same manner as in Example 1. The optical characters and the thermal conductivity of the prepared film were measured also in the same manners as in Example 1.
The results are set forth in Table 1.
The prepared film was saponified, and an orientation layer and an optically anisotropic layer were formed in the same manners as in Example 1. Thus, an optical compensatory sheet was prepared. The optical characters and the thermal conductivity of the prepared sheet were measured in the same manners as those of the cellulose acetate film.
An elliptically polarizing plate was prepared with the obtained optical compensatory sheet, and further a liquid crystal display was produced in the same manners as in Example 1. Also in the same manners as in Example 1, the contrast ratio of the produced display was measured at 10 points, and the horizontal viewing angle was measured at

the point giving the largest or smallest contrast ratio.

The results are set forth in Table 3.

[Example 5]

To the mixed solvent shown below, the following additives were dissolved and then powder of cellulose triacetate was gradually added with stirring. Thus, the following cellulose acetate solution was prepared.

| Cellulose acetate solution | |
|---|---|
| Cellulose triacetate (average acetic acid content: 60.9%, substitution degree: 2.82, viscosity average polymerization degree: 320, water content: 0.4 wt.%, viscosity of 6 wt.% methylene chloride solution: 305 mPa·s; in the form of powder in which the means particle size is 1.5 mm and the standard deviation is 0.5 mm) | 100 weight parts |
| Triphenyl phosphate (plasticizer) | 6.0 weight parts |
| Ditrimethylolpropane tetracetate (plasticizer) | 6.0 weight parts |
| Methyl acetate (first solvent) | 290 weight parts |
| Acetone (second solvent) | 25 weight parts |
| Methanol (third solvent) | 25 weight parts |
| Ethanol (fourth solvent) | 25 weight parts |
| Butanol (fifth solvent) | 25 weight parts |
| Silica (particle size: 20 nm, Mohs hardness number:approx. 7) | 0.5 weight part |
| Retardation-increasing agent used in Example 1 | 6.7 weight parts |
| $C_{12}H_{25}OCH_2CH_2O-P(=O)-(OK)_2$ (releasing agent) | 0.1 weight part |
| Citric acid (releasing agent) | 0.1 weight part |

The used cellulose triacetate contained 0.01 wt.% or less of the remaining acetic acid, 0.05 wt.% of Ca, 0.007 wt.% of Mg, and 5 ppm of Fe. The substitution degree at 6-position was 0.95, which was 32.2% based on the total substitution degree at 2-, 3- and 6-positions. The extract with acetone was 11 wt.%. The ratio between weight and number average molecular weights was 0.5, and evenly distributed. The yellowness index, the haze, the transmittance, the glass transition temperature (Tg) and the heat of crystallization were 0.3, 0.08, 93.5%, 160°C and 6.2 J/g, respectively.

From the obtained solution, a cellulose acetate film was prepared in the same manner as in Example 1. The optical characters and the thermal conductivity of the prepared film were measured also in the same manners as in Example 1. The results are set forth in Table 1.

The prepared film was saponified, and an orientation layer and an optically anisotropic layer were formed in the same manners as in Example 1. Thus, an optical compensatory sheet was prepared. The optical characters and the thermal conductivity of the prepared sheet were measured in the same manners as those of the cellulose acetate film.

An elliptically polarizing plate was prepared with the obtained optical compensatory sheet, and further a liquid crystal display was produced in the same manners as in Example 1. Also in the same manners as in Example 1, the contrast ratio of the produced display was measured at 10 points, and the horizontal viewing angle was measured at the point giving the largest or smallest contrast ratio. The results are set forth in Table 3.

[Example 6]

To the mixed solvent shown below, the following additives were dissolved and then powder of cellulose triacetate was gradually added with stirring. Thus, each following cellulose acetate solution was prepared.

| Cellulose acetate solutions (weight part) | Inner layer | Surface layer |
|---|---|---|
| Cellulose acetate (acetic acid content: 59.5 %) | 100 | 100 |
| Triphenyl phosphate (plasticizer) | 7.8 | 7.8 |

(continued)

| Cellulose acetate solutions (weight part) | Inner layer | Surface layer |
|---|---|---|
| Biphenyldiphenyl phosphate (plasticizer) | 3.9 | 3.9 |
| Methyl acetate (first solvent) | 306 | 327 |
| Cyclohexanone (second solvent) | 122 | 131 |
| Methanol (third solvent) | 30.5 | 32.7 |
| Ethanol (fourth solvent) | 30.5 | 32.7 |
| Silica (particle size: 20 nm) | 1.0 | 1.0 |
| Retardation-increasing agent used in Example 1 | 6.7 | 6.7 |

After the cellulose triacetate was added, each mixture was left at 25°C for 3 hours. The obtained inhomogeneous gels were cooled at -70°C for 6 hours, and then heated to 50°C and stirred to obtain dopes.

Each obtained dope was filtered at 50°C through a filter paper (absolute filtration precision: 0.01 mm, #63 TOYO ROSHI KAISHA LTD.), and further through another filter paper (absolute filtration precision: 0.0025 mm, FH025 PALL CORPORATION).

From the obtained dopes, a cellulose acetate film was prepared in the same manner as in Example 1 except that the dopes were cooperatively cast from a three-layer co-casting die. The optical characters and the thermal conductivity of the prepared film were measured also in the same manners as in Example 1. The results are set forth in Table 1.

The prepared film was saponified, and an orientation layer and an optically anisotropic layer were formed in the same manners as in Example 1. Thus, an optical compensatory sheet was prepared. The optical characters and the thermal conductivity of the prepared sheet were measured in the same manners as those of the cellulose acetate film.

An elliptically polarizing plate was prepared with the obtained optical compensatory sheet, and further a liquid crystal display was produced in the same manners as in Example 1. Also in the same manners as in Example 1, the contrast ratio of the produced display was measured at 10 points, and the horizontal viewing angle was measured at the point giving the largest or smallest contrast ratio. The results are set forth in Table 3.

[Comparison example 1]

(Preparation of cellulose acetate film)

The dope prepared in Example 1 was cast on a band by means of a band-casting machine. When the solvent remaining in the formed film reached 50 wt.%, the film was peeled from the band. After dried until the remaining solvent reached 40 wt.%, the film was laterally stretched by 17% with a tenter at 130°C and then held to keep the stretched width for 30 seconds at 50°C. The film was then released from the tenter. Thus, a cellulose acetate film was prepared.

(Measurement of optical characters and thermal conductivity)

The optical characters and the thermal conductivity of the prepared cellulose acetate film were measured in the same manners as in Example 1.

The results are set forth in Table 1.

(Formation of orientation layer and optically anisotropic layer)

The prepared film was saponified in the same manner as in Example 1, and an orientation layer and an optically anisotropic layer were formed also in the same manners as in Example 1. Thus, an optical compensatory sheet was prepared. The optical characters and the thermal conductivity of the prepared sheet were measured in the same manners as those of the cellulose acetate film.

Further, the average inclined angle (β) of discotic molecules was measured. The results are set forth in Table 2.

(Preparation of elliptically polarizing plate)

The procedure of Example 1 was repeated except for using the above-prepared cellulose acetate film and the above-prepared optical compensatory sheet, to prepare an elliptically polarizing plate.

The slow axis of the transparent support and the transmission axis of the polarizing membrane were placed parallel to each other. As a result, the angle between the transmission axis and the average direction of the slow axis of the support was 0.4°.

(Preparation of liquid crystal display)

The procedure of Example 1 was repeated except for using the above-prepared elliptically polarizing plate, to prepare a liquid crystal display.

Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward. Also at the point where the front contrast ratio was the smallest, the horizontal viewing angle was measured.

The results are set forth in Table 3.

[Comparison example 2]

(Preparation of cellulose acetate film)

The dope prepared in Example 2 was cast on a band by means of a band-casting machine. When the solvent remaining in the formed film reached 50 wt.%, the film was peeled from the band. After dried until the remaining solvent reached 40 wt.%, the film was laterally stretched by 17% with a tenter at 130°C and then held to keep the stretched width for 30 seconds at 50°C. The film was then released from the tenter. Thus, a cellulose acetate film was prepared.

(Measurement of optical characters and thermal conductivity)

The optical characters and the thermal conductivity of the prepared cellulose acetate film were measured in the same manners as in Example 1.

The results are set forth in Table 1.

(Formation of orientation layer and optically anisotropic layer)

The prepared film was saponified in the same manner as in Example 2, and an orientation layer and an optically anisotropic layer were formed also in the same manners as in Example 2. Thus, an optical compensatory sheet was prepared. The optical characters and the thermal conductivity of the prepared sheet were measured in the same manners as those of the cellulose acetate film.

Further, the average inclined angle (β) of discotic molecules was measured. The results are set forth in Table 2.

(Preparation of elliptically polarizing plate)

The procedure of Example 2 was repeated except for using the above-prepared cellulose acetate film and the above-prepared optical compensatory sheet, to prepare an elliptically polarizing plate.

The slow axis of the transparent support and the transmission axis of the polarizing membrane were placed parallel to each other. As a result, the angle between the transmission axis and the average direction of the slow axis of the support was 0.5°.

(Preparation of liquid crystal display)

The procedure of Example 1 was repeated except for using the above-prepared elliptically polarizing plate, to prepare a liquid crystal display.

Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward. Also at the point where the front contrast ratio was the smallest, the horizontal viewing angle was measured.

The results are set forth in Table 3.

[Comparison example 3]

(Preparation of cellulose acetate film)

The dope prepared in Example 3 was cast on a drum cooled at 0°C. When the solvent remaining in the formed film reached 70 wt.%, the film was peeled from the drum. Both ends of the film were fixed with pin-tenters, and the film was dried. The film was longitudinally stretched at 140°C between rolls placed at the interval of 0.3 m, to produce a cellulose acetate film having 102 μm thickness.
An undercoating layer, an overcoating layer and a backing layer were formed on the cellulose acetate film in the same manners as in Example 3, to prepare a transparent support.

(Measurement of optical characters and thermal conductivity)

The optical characters and the thermal conductivity of the prepared transparent support were measured in the same manners as in Example 1.
The results are set forth in Table 1.

(Formation of orientation layer and optically anisotropic layer)

An orientation layer and an optically anisotropic layer were formed on the overcoating layer of the support in the same manners as in Example 1.
Thus, an optical compensatory sheet was prepared. The optical characters and the thermal conductivity of the prepared sheet were measured in the same manners as those of the cellulose acetate film.
Further, the average inclined angle (β) of discotic molecules was measured. The results are set forth in Table 2.

(Preparation of elliptically polarizing plate)

The procedure of Example 3 was repeated except for using the above-prepared cellulose acetate film and the above-prepared optical compensatory sheet, to prepare an elliptically polarizing plate.
The slow axis of the inner transparent protective film, the slow axis of the transparent support and the transmission axis of the polarizing membrane were placed parallel to each other. As a result, the angle between the transmission axis and the average direction of the slow axes of the protective film and the support was 0.4°.

(Preparation of liquid crystal display)

The procedure of Example 1 was repeated except for using the above-prepared elliptically polarizing plate, to prepare a liquid crystal display.
Voltage (white: 2V, black: 6V) was applied to the liquid crystal cell, and an image was displayed and frontally seen to measure a front contrast ratio by means of a meter (EZ-Contrast 160D, ELDIM). The measurement of the front contrast ratio was carried out at ten points on the screen. At the point where the front contrast ratio was the largest, the horizontal viewing angle was measured. Here, the term "horizontal viewing angle" means an angle in which a contrast ratio of 10 or more is observed leftward-rightward. Also at the point where the front contrast ratio was the smallest, the horizontal viewing angle was measured.
The results are set forth in Table 3.

TABLE 1

| Support | Re | Rth | Angle of slow axis | Standard deviation | Thermal conductivity |
|---|---|---|---|---|---|
| Example 1 | 40 nm | 220 nm | 0.3° | 0.5° | 0.22 W/m·°C |
| Example 2 | 20 nm | 110 nm | 0.4° | 0.3° | 0.21 W/m·°C |
| Example 3 | 17 nm | 79 nm | 0.5° | 0.5° | 0.22 W/m·°C |
| Example 4 | 40 nm | 220 nm | 0.5° | 0.3° | 0.22 W/m·°C |
| Example 5 | 39 nm | 222 nm | 0.3° | 0.5° | 0.21 W/m·°C |
| Example 6 | 40 nm | 220 nm | 0.4° | 0.4° | 0.23 W/m·°C |
| Comp.Ex.1 | 42 nm | 224 nm | 0.4° | 2.7° | 0.23 W/m·°C |
| Comp.Ex.2 | 21 nm | 112 nm | 0.5° | 2.2° | 0.22 W/m·°C |

TABLE 1 (continued)

| Support | Re | Rth | Angle of slow axis | Standard deviation | Thermal conductivity |
|---|---|---|---|---|---|
| Comp.Ex.3 | 18 nm | 80 nm | 0.4° | 2.5° | 0.21 W/m·°C |

TABLE 2

| Sheet | Re | β | Rth | Thermal conductivity |
|---|---|---|---|---|
| Example 1 | 34 nm | 35.0° | 80 nm | 0.24 W/m·°C |
| Example 2 | 35 nm | 35.5° | 78 nm | 0.25 W/m·°C |
| Example 3 | 34 nm | 35.0° | 80 nm | 0.24 W/m·°C |
| Example 4 | 34 nm | 35.0° | 80 nm | 0.24 W/m·°C |
| Example 5 | 35 nm | 35.5° | 78 nm | 0.25 W/m·°C |
| Example 6 | 34 nm | 35.0° | 80 nm | 0.23 W/m·°C |
| Comp.Ex.1 | 33 nm | 36.0° | 76 nm | 0.24 W/m·°C |
| Comp.Ex.2 | 34 nm | 35.0° | 80 nm | 0.23 W/m·°C |
| Comp.Ex.3 | 35 nm | 35.0° | 79 nm | 0.23 W/m·°C |

TABLE 3

| Liquid crystal display | Front contrast ratio | | Viewing angle | |
|---|---|---|---|---|
| | Maximum | Minimum | Maximum | Minimum |
| Example 1 | 270 | 200 | 160° | 140° |
| Example 2 | 250 | 200 | 160° | 150° |
| Example 3 | 260 | 190 | 160° | 145° |
| Example 4 | 280 | 210 | 160° | 150° |
| Example 5 | 290 | 200 | 160° | 140° |
| Example 6 | 270 | 200 | 160° | 140° |
| Comp.Ex.1 | 270 | 25 | 160° | 30° |
| Comp.Ex.2 | 242 | 50 | 160° | 40° |
| Comp.Ex.3 | 255 | 40 | 160° | 35° |

[Example 7]

(Preparation of cellulose acetate solution)

The following components were placed in a mixing tank, heated and stirred to dissolve, to prepare a cellulose acetate solution. In the following cellulose acetate, reused cellulose acetate was contained in the amount of 30 wt.%.

| Cellulose acetate solution | |
|---|---|
| Cellulose acetate (acetic acid content: 60.9 %) | 100 weight parts |
| Triphenyl phosphate (plasticizer) | 7.8 weight parts |
| Biphenyldiphenyl phosphate (plasticizer) | 3.9 weight parts |
| Methylene chloride (first solvent) | 300 weight parts |
| Methanol (second solvent) | 54 weight parts |
| 1-Butanol (third solvent) | 11 weight parts |

(Preparation of retardation-increasing agent solution)

In another mixing tank, 16 weight parts of the retardation-increasing agent used in Example 1, 80 weight parts of methylene chloride and 20 weight parts of methanol were placed, heated and stirred, to prepare a retardation-increasing agent solution.

(Preparation of cellulose acetate film)

The cellulose acetate solution (474 weight parts) and the retardation-increasing agent solution (25 weight parts) were mixed and stirred well to prepare a dope. The prepared dope contained the retardation-increasing agent in the amount of 3.5 weight parts based on 100 weight parts of cellulose acetate.

The dope was cast on a band by means of a band-casting machine, and the formed film was stretched under the conditions shown in Table 4, to prepare a cellulose acetate film TAC-1 (thickness: 80 μm).

(Measurement of Re and Rth)

The Re and Rth retardation values of the prepared film were measured at 550 nm by means of an ellipsometer (M-150, JEOL COORPORATION). These retardation values were measured at ten points laterally arranged at equal intervals. With respect to each of Re and Rth, the maximum, the minimum and the average values were obtained. The difference between the maximum and the minimum values was divided with the average value, and the obtained value in terms of percent was defined as the fluctuation range.

The results are set forth in Table 5.

(Measurement of fluctuation of slow axis)

The fluctuation of angle of slow axis was measured by means of an optical birefringence analyzer (KOBRA-21ADH, Oji Scientific Instrument Co., Ltd.) at ten points laterally arranged in the whole width at equal intervals, to obtain the standard deviation.

For determining the fluctuation range, the direction (angle) of slow axis was measured at 20 points laterally arranged in the whole width in equal intervals. The first to fourth largest measured angles in absolute values were averaged, and also the first to fourth smallest angles in absolute values were averaged. The difference between the former and the latter average angles is defined as the fluctuation range.

The results are set forth in Table 5.

(Measurement of breaking extension and stress points)

A strip (length: 15 cm, width: 1 cm) was sampled along the stretching direction (if stretched both in MD and TD directions, along the direction in which it was more stretched). The strip was stretched to break under the conditions of 25°C and 60%RH at the speed of 10 mm/minute by means of a tension tester (in which the distance between chucks was 10 cm), so as to measure how long the sample was stretched and how much the sample was stressed when it was broken.

The results are set forth in Table 5.

(Measurement of shrink-starting temperature)

A strip (length along the direction in which it was more stretched: 35 mm, length along the direction in which it was less stretched: 3 mm) was sampled. Both ends of the sample strip were held with chucks placed longitudinally at intervals of 25 mm. While the temperature was elevated from 30°C to 200°C at the rate of 3°C/minute with the sample tensed at 0.04 N, the dimension change of the sample was measured. The temperature at which the sample shrunk by 2% based on the length at 30°C was defined as the shrink-starting temperature.

The results are set forth in Table 5.

[Example 8]

The dope prepared in Example 7 was cast on a band by means of a band-casting machine. In the cellulose acetate of the dope, reused cellulose acetate was contained in the amount of 50 wt.%. The formed film was stretched under the conditions shown in Table 4, to prepare a cellulose acetate film TAC-2 (thickness: 80 μm).

The characters of the film were measured in the same manner as in Example 7. The results are set forth in Table 5.

[Example 9]

The cellulose acetate solution prepared in Example 7 (474 weight parts) and the retardation-increasing agent solution prepared in Example 7 (56 weight parts) were mixed and stirred well to prepare a dope. The prepared dope contained the retardation-increasing agent in the amount of 7.8 weight parts based on 100 weight parts of cellulose acetate. In the cellulose acetate of the dope, reused cellulose acetate was contained in the amount of 90 wt.%. The prepared dope was cast on a band by means of a band-casting machine to form a film. The formed film was stretched under the conditions shown in Table 4, to prepare a cellulose acetate film TAC-3 (thickness: 80 μm).
The characters of the film were measured in the same manner as in Example 7. The results are set forth in Table 5.

[Example 10]

The cellulose acetate solution prepared in Example 7 (474 weight parts) and the retardation-increasing agent solution prepared in Example 7 (56 weight parts) were mixed and stirred well to prepare a dope. The prepared dope contained the retardation-increasing agent in the amount of 7.8 weight parts based on 100 weight parts of cellulose acetate. In the cellulose acetate of the dope, reused cellulose acetate was contained in the amount of 10 wt.%. The prepared dope was cast on a band by means of a band-casting machine to form a film. The formed film was stretched under the conditions shown in Table 4, to prepare a cellulose acetate film TAC-4 (thickness: 80 μm).
The characters of the film were measured in the same manner as in Example 7. The results are set forth in Table 5.

[Comparison example 4]

In dichloromethane, 2,2'-bis(4-hydroxyphenyl)propane polycarbonate resin (viscosity average polymerization degree: 28,000) was dissolved to prepare a 18 wt.% solution. The solution was defoamed in vacuum to obtain a dope, which was cast on a band to form a film. The formed film was peeled, dried at 100°C, and stretched under the conditions shown in Table 4, to prepare a polycarbonate film PC-4 (thickness: 100 μm). The stretching was controlled longitudinally by difference between the speeds of two catching rolls and laterally by the width of tenter.
The characters of the film were measured in the same manner as in Example 7. The results are set forth in Table 5.

[Comparison example 5]

In toluene, 100 weight parts of norbornene-based polymer (Artone, JSR co., Ltd.) and 5 weight parts of plasticizer (diethyl phthalate) were dissolved to prepare a 25 wt.% solution. The solution was defoamed in vacuum to obtain a dope, which was cast on a band to form a film. The formed film was stretched under the conditions shown in Table 4, to prepare an ARTON film AR-1 (thickness: 65 μm). The stretching was controlled longitudinally by difference between the speeds of two catching rolls and laterally by the width of tenter.
The characters of the film were measured in the same manner as in Example 7. The results are set forth in Table 5.

[Comparison example 6]

The dope prepared in Example 7 was cast on a band by means of a band-casting machine. In the cellulose acetate of the dope, reused cellulose acetate was contained in the amount of 0 wt.%. The formed film was stretched under the conditions shown in Table 4, to prepare a cellulose acetate film TAC-5 (thickness: 80 μm).
The characters of the film were measured in the same manner as in Example 7. The results are set forth in Table 5.

[Comparison example 7]

The dope prepared in Example 7 was cast on a band by means of a band-casting machine. In the cellulose acetate of the dope, reused cellulose acetate was contained in the amount of 0 wt.%. The formed film was stretched under the conditions shown in Table 4, to prepare a cellulose acetate film TAC-6 (thickness: 80 μm).
The characters of the film were measured in the same manner as in Example 7. The results are set forth in Table 5.

[Comparison example 8]

The dope prepared in Example 9 was cast on a band by means of a band-casting machine. The formed film was stretched under the conditions shown in Table 4, to prepare a cellulose acetate film TAC-7 (thickness: 80 μm).

The characters of the film were measured in the same manner as in Example 7. The results are set forth in Table 5.

[Comparison example 9]

The dope prepared in Example 9 was cast on a band by means of a band-casting machine. The formed film was stretched under the conditions shown in Table 4, to prepare a cellulose acetate film TAC-8 (thickness: 80 μm).

The characters of the film were measured in the same manner as in Example 7. The results are set forth in Table 5.

[Comparison example 10]

The same dope as that in Comparison example 4 was cast on a band. The formed film was stretched under the conditions shown in Table 4, to prepare a polycarbonate film PC-2 (thickness: 100 μm). The stretching was controlled longitudinally by difference between the speeds of two catching rolls and laterally by the width of tenter.

The characters of the film were measured in the same manner as in Example 7. The results are set forth in Table 5.

[Comparison example 11]

The same dope as that in Comparison example 5 was cast on a band. The formed film was dried at 120°C for 10 minutes, peeled and stretched under the conditions shown in Table 4, to prepare an ARTON film AR-2 (thickness: 65 μm). The stretching was controlled longitudinally by difference between the speeds of two catching rolls and laterally by the width of tenter.

The characters of the film were measured in the same manner as in Example 7. The results are set forth in Table 5.

TABLE 4

| | Remaining solvent | Preheating | | Stretching | | | |
|---|---|---|---|---|---|---|---|
| | | Temperature | Time (sec) | Direction | Speed (%/min) | Temperature | Ratio |
| Example 7 | 20% | 110°C | 30 | TD | 50 | 130°C | 20% |
| Example 8 | 35% | 70°C | 60 | TD | 20 | 140°C | 30% |
| Example 9 | 10% | 130°C | 15 | TD | 100 | 115°C | 10% |
| Example 10 | 25% | 90°C | 120 | TD | 180 | 100°C | 25% |
| Comp. Ex. 4 | 49% | 150°C | 5 | MD | 5 | 90°C | 50% |
| | 22% | 150°C | 5 | TD | 5 | 90°C | 3% |
| Comp. Ex. 5 | 14% | 50°C | 180 | MD | 300 | 160°C | 3% |
| | 4% | 50°C | 180 | TD | 300 | 160°C | 50% |
| Comp. Ex. 6 | 1% | 110°C | 30 | TD | 50 | 130°C | 20% |
| Comp. Ex. 7 | 35% | Not done | | TD | 20 | 140°C | 30% |
| Comp. Ex. 8 | 10% | 130°C | 15 | TD | 500 | 115°C | 90% |
| Comp. Ex. 9 | 25% | 90°C | 120 | TD | 180 | 100°C | 25% |
| Comp. Ex. 10 | 49% | 150°C | 5 | MD | 5 | 90°C | 50% |
| | 22% | 150°C | 5 | TD | 5 | 90°C | 3% |
| Comp. Ex. 11 | 4% | 50°C | 180 | MD | 300 | 160°C | 3% |
| | 4% | 50°C | 180 | TD | 300 | 160°C | 50% |

TABLE 4 (continued)

| | Stretching direction | After heating | | Cooling relaxation | |
|---|---|---|---|---|---|
| | | Temperature | Time | Ratio | Speed (°C/min) |
| Example 7 | TD | 130°C | 30 sec | 4% | 60 |
| Example 8 | TD | 145°C | 15 sec | 2% | 120 |
| Example 9 | TD | 100°C | 60 sec | 6% | 30 |
| Example 10 | TD | 115°C | 100 sec | 8% | 180 |
| Comp. Ex. 4 | MD | 90°C | 180 sec | 10% | 10 |
| | TD | 90°C | 180 sec | 10% | 10 |
| Comp. Ex. 5 | MD | 150°C | 5 sec | 1% | 300 |
| | TD | 150°C | 5 sec | 1% | 300 |
| Comp. Ex. 6 | TD | 130°C | 30 sec | 4% | 60 |
| Comp. Ex. 7 | TD | 145°C | 15 sec | 2% | 120 |
| Comp. Ex. 8 | TD | 100°C | 60 sec | 6% | 30 |
| Comp. Ex. 9 | TD | Not done | | 8% | 180 |
| Comp. Ex. 10 | MD | 90°C | 180 sec | 15% | 5 |
| | TD | 90°C | 180 sec | 15% | 5 |
| Comp. Ex. 11 | MD | 150°C | 5 sec | 0% | 500 |
| | TD | 150°C | 5 sec | 0% | 500 |

TABLE 5

| | Film | Breaking point | | Slow axis | |
|---|---|---|---|---|---|
| | | Stress | Extension | Standard deviation | Fluctuation range |
| Example 7 | TAC-1 | 16 $kg/mm^2$ | 25% | 0.5° | 0.8° |
| Example 8 | TAC-2 | 14 $kg/mm^2$ | 15% | 0.8° | 2.0° |
| Example 9 | TAC-3 | 18 $kg/mm^2$ | 30% | 0.3° | 0.4° |
| Example 10 | TAC-4 | 15 $kg/mm^2$ | 20% | 1.2° | 1.2° |
| Comp. Ex.4 | PC-1 | 11 $kg/mm^2$ | 30% | 3.0° | 4.8° |
| Comp. Ex.5 | AR-1 | 20 $kg/mm^2$ | 10% | 2.0° | 3.3° |
| Comp. Ex.6 | TAC-5 | 9 $kg/mm^2$ | 7% | 5.0° | 7.6° |
| Comp. Ex.7 | TAC-6 | 8 $kg/mm^2$ | 6% | 8.0° | 9.3° |
| Comp. Ex.8 | TAC-7 | 6 $kg/mm^2$ | 3% | 7.5° | 8.3° |
| Comp. Ex.9 | TAC-8 | 7 $kg/mm^2$ | 5% | 11.0° | 15.2° |
| Comp.Ex.10 | PC-2 | 7 $kg/mm^2$ | 55% | 12.0° | 12.3° |
| Comp.Ex.11 | AR-2 | 22 $kg/mm^2$ | 3% | 11.8° | 18.9° |

TABLE 5 (continued)

| | Film | Re Average (nm) | Re Fluctuation range | Rth Average (nm) | Rth Fluctuation range | Shrink-starting temperature |
|---|---|---|---|---|---|---|
| Example 7 | TAC-1 | 25 | 3% | 110 | 5% | 150°C |
| Example 8 | TAC-2 | 35 | 5% | 180 | 6% | 140°C |
| Example 9 | TAC-3 | 15 | 1% | 90 | 3% | 160°C |
| Example 10 | TAC-4 | 20 | 2% | 80 | 1% | 170°C |
| Comp. Ex.4 | PC-1 | 68 | 9% | 380 | 9% | 190°C |
| Comp. Ex.5 | AR-1 | 45 | 7% | 255 | 8% | 130°C |
| Comp. Ex.6 | TAC-5 | 37 | 12% | 300 | 15% | 120°C |
| Comp. Ex.7 | TAC-6 | 77 | 16% | 340 | 25% | 115°C |
| Comp. Ex.8 | TAC-7 | 85 | 18% | 450 | 22% | 110°C |
| Comp. Ex.9 | TAC-8 | 80 | 20% | 420 | 26% | 110°C |
| Comp.Ex.10 | PC-2 | 90 | 30% | 470 | 29% | 200°C |
| Comp.Ex.11 | AR-2 | 100 | 37% | 550 | 31% | 200°C |

[Example 11]

The procedure of Example 1 was repeated except for using the cellulose acetate film TAC-1 (prepared in Example 7), to saponify the film and to form an orientation layer and an optically anisotropic layer. Thus, an optical compensatory sheet was produced. From the produced optical compensatory sheet and a polarizing plate used in Example 1, an elliptically polarizing plate and a liquid crystal display were also produced in the same manners in Example 1. In the polarizing plate, the TAC-1 and the polarizing membrane were positioned so that their longitudinal directions might be parallel to each other. As a result, the angle between the transmission axis of the membrane and the average direction of the slow axis of the TAC-1 was 0.5°.

[Example 12]

The procedure of Example 11 was repeated except for using the cellulose acetate film TAC-2 (prepared in Example 8), to produce a polarizing plate. The angle between the transmission axis of the polarizing membrane and the average direction of the slow axis of the TAC-2 was 0.3°.

[Example 13]

The procedure of Example 11 was repeated except for using the cellulose acetate film TAC-3 (prepared in Example 9), to produce a polarizing plate. The angle between the transmission axis of the polarizing membrane and the average direction of the slow axis of the TAC-3 was 1.0°.

[Example 14]

The procedure of Example 11 was repeated except for using the cellulose acetate film TAC-4 (prepared in Example 10), to produce a polarizing plate. The angle between the transmission axis of the polarizing membrane and the average direction of the slow axis of the TAC-4 was 0.4°.

[Comparison example 12]

The procedure of Example 11 was repeated except for using the cellulose acetate film TAC-5 (prepared in Comparison example 6), to produce a polarizing plate. The angle between the transmission axis of the polarizing membrane and the average direction of the slow axis of the TAC-5 was 0.5°.

[Comparison example 13]

The procedure of Example 11 was repeated except for using the cellulose acetate film TAC-6 (prepared in Comparison example 7), to produce a polarizing plate. The angle between the transmission axis of the polarizing membrane and the average direction of the slow axis of the TAC-6 was 3.9°.

[Comparison example 14]

The procedure of Example 11 was repeated except for using the cellulose acetate film TAC-7 (prepared in Comparison example 8), to produce a polarizing plate. The angle between the transmission axis of the polarizing membrane and the average direction of the slow axis of the TAC-7 was 0.2°.

[Comparison example 15]

The procedure of Example 11 was repeated except for using the cellulose acetate film TAC-8 (prepared in Comparison example 9), to produce a polarizing plate. The angle between the transmission axis of the polarizing membrane and the average direction of the slow axis of the TAC-8 was 4.2°.

[Comparison example 16]

Iodine was adsorbed on a stretched polyvinyl alcohol film to prepare a polarizing membrane. On one surface of the membrane, the polycarbonate film PC-1 (prepared in Comparison example 4) was laminated with acrylic adhesive. The membrane and the film were positioned so that their longitudinal directions might be parallel to each other. As a result, the angle between the transmission axis of the membrane and the average direction of the slow axis of the PC-1 was 0.4°.

A commercially available triacetyl cellulose film (Fujitac TD80UF, Fuji Photo Film Co., Ltd.) was saponified, and laminated on the other surface of the polarizing membrane with polyvinyl adhesive. Thus, a polarizing plate was prepared.

[Comparison example 17]

The procedure of Comparison example 16 was repeated except for using the polycarbonate film PC-2 prepared in Comparison example 10, to produce a polarizing plate. The angle between the transmission axis of the membrane and the average direction of the slow axis of the PC-2 was 4.0°.

[Comparison example 18]

Iodine was adsorbed on a stretched polyvinyl alcohol film to prepare a polarizing membrane. On one surface of the membrane, the ARTON film AR-1 (prepared in Example 11) was laminated with acrylic adhesive. The membrane and the film were positioned so that their longitudinal directions might be parallel to each other. As a result, the angle between the transmission axis of the membrane and the average direction of the slow axis of the AR-1 was 0.3°.

A commercially available triacetyl cellulose film (Fujitac TD80UF, Fuji Photo Film Co., Ltd.) was saponified, and laminated on the other surface of the polarizing membrane with polyvinyl adhesive. Thus, a polarizing plate was prepared.

[Comparison example 19]

The procedure of Comparison example 18 was repeated except for using the ARTON film AR-2 prepared in Comparison example 11, to produce a polarizing plate. The angle between the transmission axis of the membrane and the average direction of the slow axis of the AR-2 was 3.1°.

[Example 15]

(Preparation of transparent support)

The cellulose acetate solution prepared in Example 7 (477 weight parts) and the retardation-increasing agent solution prepared in Example 7 (52 weight parts) were mixed and stirred well to prepare a dope. The prepared dope contained the retardation-increasing agent in the amount of 6.7 weight parts based on 100 weight parts of cellulose acetate. In the cellulose acetate of the dope, reused cellulose acetate was contained in the amount of 40 wt.%. The prepared dope was cast to form a film. The formed film was stretched under the conditions shown in Table 6, to prepare a transparent support.

The characters of the prepared support were measured in the same manner as those in Table 5. The results are set forth in Table 7.

(Saponification of cellulose acetate film)

The prepared cellulose acetate film (transparent support) TAC-9 was immersed in 1.5 N aqueous NaOH solution at 55°C for 2 minutes. The film was then washed with water in a washing bath at room temperature, and neutralized with 0.1 N sulfuric acid at 30°C. After washed again with water in the washing bath at room temperature, the film was dried with blowing air at 100°C. Thus, the surface of the cellulose acetate film TAC-9 was saponified.

(Formation of orientation layer)

On one surface of the saponified cellulose acetate film (transparent support) TAC-9, the following coating solution was then applied in the amount of 24 ml/$m^2$ by means of a wire bar coater of #14. The applied solution was dried with hot air at 60°C for 60 seconds, and then further dried with hot air at 90°C for 150 seconds. The formed layer was subjected to the rubbing treatment in which the rubbing direction was at the angle of 45° to the stretching direction (which was almost parallel to the slow axis) of the polymer film, to form an orientation layer.

| Coating solution for orientation layer | |
|---|---|
| The following denatured polyvinyl alcohol | 20 weight parts |
| Water | 360 weight parts |
| Methanol | 120 weight parts |
| Glutaric aldehyde (crosslinking agent) | 0.5 weight part |

(Denatured polyvinyl alcohol)

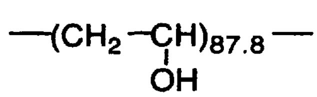

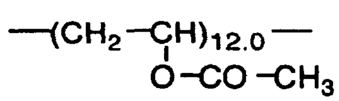

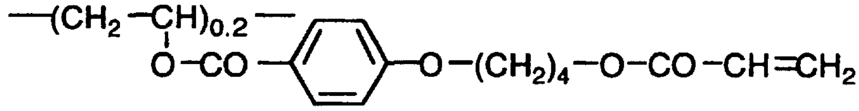

(Formation of optically anisotropic layer)

To prepare another coating solution, 41.01 g of the discotic liquid crystal compound used in Example 1, 4.06 g of ethylene oxide denatured trimethlolpropanetriacrylate (V#360, Osaka Organic Chemicals Co., Ltd.), 0.90 g of cellulose acetate butyrate (CAB-551-0.2, Eastman Chemical), 0.23 g of cellulose acetate butyrate (CAB-531-1, Eastman Chemical), 1.35 g of a photopolymerization initiator (Irgacure 907, Ciba-Geigy) and 0.45 g of a sensitizer (Kayacure DETX, Nippon Kayaku Co., Ltd.) were dissolved in 102 g of methyl ethyl ketone. The coating solution was then applied on the orientation layer on the cellulose acetate film TAC-9 by means of a wire bar coater of #3. The thus-treated film was heated in a thermostat at 130°C for 2 minutes to align the molecules of the discotic liquid crystal compound. The film was then irradiated at 130°C cm in the amount of 250 $mJ/cm^2$ with ultraviolet rays emitted from a high-pressure mercury lamp of 120 W/cm, to polymerize the discotic molecules. The film was cooled to room temperature to form an optically anisotropic layer.

Thus, an optical compensatory sheet RF-1 was prepared. The optical characters and the thermal conductivity of the prepared sheet were measured. The results are set forth in Table 10.

(Preparation of elliptically polarizing plate)

Iodine was adsorbed on a stretched polyvinyl alcohol film to prepare a polarizing membrane. On one surface of the membrane, the prepared optical compensatory sheet RF-1 was laminated with polyvinyl adhesive. The membrane and the sheet RF-1 were positioned so that their longitudinal directions might be parallel to each other. As a result, the angle between the transmission axis and the average direction of the slow axis of TAC-9 (which was a support of the sheet RF-1) was 0.3°.

A commercially available triacetyl cellulose film (Fujitac TD80, Fuji Photo Film Co., Ltd.) was saponified in the same manner as the optical compensatory sheet RF-1, and laminated on the other surface of the polarizing membrane with polyvinyl adhesive. Thus, an elliptically polarizing plate was prepared.

(Preparation of liquid crystal cell of bend alignment mode)

On a glass plate having an ITO electrode, an orientation film of polyimide was provided and subjected to a rubbing treatment. This procedure was repeated to prepare two substrates, and the substrates were arranged face-to-face so that the rubbing directions might be parallel and that the gap might be 6 μm. Between them, a liquid crystal having Δn of 0.1396 (ZLI1132, Merck & Co., Inc.) was introduced to prepare a liquid crystal cell of bend alignment.

(Preparation of liquid crystal display)

Two elliptically polarizing plates prepared above were laminated on the liquid crystal cell so that the cell might be between the plates. The plates were arranged so that the optically anisotropic layer in each plate might face to the cell substrate and that the rubbing directions of the cell and the optically anisotropic layer might be anti-parallel.

Voltage (white: 2V, black: 6V) was applied to the liquid crystal cell, and an image was displayed and observed to measure horizontal and vertical minimum angles giving the contrast ratio of 10:1 by means of a meter (EZ-Contrast 160D, ELDIM). Further, a black image was displayed on the whole screen, and undesirable brilliant points and uneven displaying defects were observed.

The results are set forth in Table 9.

[Example 16]

(Preparation of transparent support)

The cellulose acetate solution prepared in Reference Example 1 (477 weight parts) and the retardation-increasing agent solution prepared in Example 7 (21 weight parts) were mixed and stirred well to prepare a dope. The prepared dope contained the retardation-increasing agent in the amount of 2.8 weight parts based on 100 weight parts of cellulose acetate. In the cellulose acetate of the dope, reused cellulose acetate was contained in the amount of 60

wt.%. The prepared dope was cast to form a film. The formed film was stretched under the conditions shown in Table 6, to prepare a transparent support.

The characters of the prepared support were measured in the same manner as those in Table 5. The results are set forth in Table 7.

(Preparation of optical compensatory sheet)

One surface of the cellulose acetate film (transparent support) TAC-10 was coated with 1.5 N isopropyl alcohol solution of KOH in the amount of 25 ml/$m^2$, and dried at 25°C for 5 seconds. The film was then washed with flowing water for 10 seconds, and blown with air at 25°C to dry. Thus, a surface of the cellulose acetate film TAC 10 was saponified.

On the saponified surface of the cellulose acetate film TAC-10, an orientation layer was formed in the same manner as in Example 15. After the orientation layer was subjected to the rubbing treatment, an optically anisotropic layer was formed in the same manner as in Example 15.

Thus, an optical compensatory sheet RF-2 was prepared. The optical characters and the thermal conductivity of the prepared sheet were measured. The results are set forth in Table 8.

(Preparation of elliptically polarizing plate)

Iodine was adsorbed on a stretched polyvinyl alcohol film to prepare a polarizing membrane. On one surface of the membrane, another saponified cellulose acetate film TAC-10 was laminated with polyvinyl adhesive so that the saponified surface of TAC-10 might be in contact with the membrane.

A commercially available triacetyl cellulose film (Fujitac TD80, Fuji Photo Film Co., Ltd.) was saponified in the same manner as the optical compensatory sheet RF-1 of Example 15, and laminated with polyvinyl adhesive to be the outer transparent protective film on the other surface of the polarizing membrane.

The optical compensatory sheet RF-2 was then laminated on the TAC-10 provided on the membrane with polyvinyl adhesive so that the support (cellulose acetate film TAC-10) might in contact with the TAC-10 on the membrane.

The TAC-10 beforehand provided on the membrane and the other TAC-10 serving as the support of the compensatory sheet were placed so that their longitudinal directions might be parallel to each other.

As a result, the angle between the transmission axis of the polarizing membrane and the average direction of the slow axes of the TAC-10 films was 0.4°.

Thus, an elliptically polarizing plate was produced.

(Preparation of liquid crystal display)

The procedure of Example 15 was repeated except for using the above-prepared elliptically polarizing plate, to prepare a liquid crystal display. The display was evaluated in the same manner as in Example 15. The results are set forth in Table 9.

[Comparison example 30]

(Preparation of transparent support)

The dope prepared in Example 15 was laterally stretched with a tenter at 130°C by 17%, cast, and stretched again under the condition shown in Table 6. The characters of the prepared film (support) were measured in the same manner as those in Table 5. The results are set forth in Table 7.

(Preparation of optical compensatory sheet)

The procedure of Example 15 was repeated except for using the cellulose acetate film TAC-11, to prepare an optical compensatory sheet RF-3. The optical characters of the prepared sheet were measured. The results are set forth in Table 8.

(Preparation of elliptically polarizing plate)

The procedure of Example 15 was repeated except for using the prepared optical compensatory sheet RF-3, to prepare an elliptically polarizing plate. The angle between the transmission axis of the polarizing membrane and

the average direction of the slow axis of TAC-11 (support of the RF-3) was 0.4°.

(Preparation of liquid crystal display)

The procedure of Example 15 was repeated except for using the above-prepared elliptically polarizing plate, to prepare a liquid crystal display. The display was evaluated in the same manner as in Example 15. The results are set forth in Table 9.

[Comparison example 31]

(Preparation of transparent support)

The dope prepared in Example 16 was laterally stretched with a tenter at 130°C by 17%, cast, and stretched again under the condition shown in Table 6. The characters of the prepared film (support) were measured in the same manners as those in Table 5. The results are set forth in Table 7.

(Preparation of optical compensatory sheet)

The procedure of Example 15 was repeated except for using the cellulose acetate film TAC-12, to prepare an optical compensatory sheet RF-4. The optical characters of the prepared sheet were measured. The results are set forth in Table 8.

(Preparation of elliptically polarizing plate)

The procedure of Example 15 was repeated except for using the prepared RF-4 as the optical compensatory sheet and the prepared TAC-12 as the cellulose acetate film, to prepare an elliptically polarizing plate. The angle between the transmission axis of the polarizing membrane and the average direction of the slow axes of TAC-12 films was 0.5°.

(Preparation of liquid crystal display)

The procedure of Example 15 was repeated except for using the above-prepared elliptically polarizing plate, to prepare a liquid crystal display. The display was evaluated in the same manner as in Example 15. The results are set forth in Table 9.

TABLE 6

| | Remaining solvent | Preheating | | Stretching | | | |
|---|---|---|---|---|---|---|---|
| | | Temperature | Time (sec) | Direction | Speed (%/min) | Temperature | Ratio (%) |
| Example 15 | 18% | 115°C | 40 | TD | 60 | 125°C | 20 |
| Example 16 | 30% | 90°C | 45 | TD | 40 | 130°C | 18 |
| Comp.Ex.30 | 1% | 110°C | 30 | TD | 50 | 130°C | 58 |
| Comp.Ex.31 | 35% | Not done | | TD | 20 | 140°C | 2 |

TABLE 6 (continued)

| | Stretching direction | After heating | | Cooling relaxation | |
|---|---|---|---|---|---|
| | | Temperature | Time | Ratio | Speed |
| Example 15 | TD | 125°C | 40 sec | 3% | 80°C/min |
| Example 16 | TD | 130°C | 25 sec | 2% | 70°C/min |
| Comp. Ex. 30 | TD | Not done | | 4% | 60°C/min |
| Comp. Ex. 31 | TD | 145°C | 15 sec | 2% | 120°C/min |

TABLE 7

| | | Breaking point | | Slow axis | |
|---|---|---|---|---|---|
| | Film | Stress | Extension | Standard deviation | Fluctuation range |
| Example 15 | TAC-9 | 18 $kg/mm^2$ | 27% | 0.3° | 0.5° |
| Example 16 | TAC-10 | 17 $kg/mm^2$ | 19% | 0.6° | 0.4° |
| Comp. Ex. 30 | TAC-11 | 8 $kg/mm^2$ | 7% | 5.5° | 7.6° |
| Comp. Ex. 31 | TAC-12 | 6 $kg/mm^2$ | 6% | 8.6° | 9.8° |

TABLE 7 (continued)

| | Film | Re Average (nm) | Re Fluctuation range | Rth Average (nm) | Rth Fluctuation range | Shrink starting temperature |
|---|---|---|---|---|---|---|
| Example 15 | TAC-9 | 22 | 2% | 120 | 3% | 155°C |
| Example 16 | TAC-10 | 31 | 2% | 130 | 4% | 144°C |
| Comp. Ex. 30 | TAC-11 | 49 | 12% | 450 | 15% | 120°C |
| Comp. Ex. 31 | TAC-12 | 14 | 16% | 44 | 15% | 220°C |

TABLE 8

| | Re | | | Rth | | | Shrink starting temperature |
|---|---|---|---|---|---|---|---|
| | Sheet | Average (nm) | Fluctuation range | β (°) | Average (nm) | Fluctuation range | |
| Example 15 | RF-1 | 34 | 1% | 35.0 | 100 | 2% | 145°C |
| Example 16 | RF-2 | 35 | 2% | 35.5 | 110 | 1% | 139°C |
| Comp.Ex.30 | RF-3 | 33 | 9% | 36.0 | 111 | 7% | 122°C |
| Comp.Ex.31 | RF-4 | 34 | 10% | 35.0 | 109 | 9% | 200°C |

TABLE 9

| Liquid crystal display | Minimum viewing angle | | Undesirable brilliant point | Uneven defects |
|---|---|---|---|---|
| | Central area | Peripheral area | | |
| Example 15 | 145° | 133° | 0 | 0% |
| Example 16 | 154° | 135° | 0 | 0% |
| Comp. Ex. 30 | 33° | 12° | 21 | 18% |
| Comp. Ex. 31 | 20° | 10° | 38 | 19% |

[Examples 17 to 21]

Cellulose acetates were synthesized under the conditions shown in the following Table 10. A cellulose acetate is generally synthesized by the steps of acetylating cellulose with acetic anhydride in the presence of sulfuric acid catalysis, and controlling the acetic acid content to the desired value with magnesium acetate. The conditions such as the amounts of sulfuric acid and magnesium acetate (in the form of 30 wt.% aqueous solution of magnesium acetate) and time for acetylation were adjusted as shown in Table 10, to prepare each cellulose acetate having each substitution

degree at 6-position. The other synthetic conditions were the same as those described in Synthetic example 3 of Japanese Patent Provisional Publication No. 11(1999)-5851.

TABLE 10

| | $H_2SO_4$ (weight part) | Time for acetylation (minute) | $Mg(CH_3COO)_2$ (weight part) | Substitution degree at 6-position (%) |
|---|---|---|---|---|
| Example 17 | 7.5 | 300 | 25 | 30.5 |
| Example 18 | 6.5 | 330 | 24 | 32.2 |
| Example 19 | 5.5 | 360 | 23 | 35.3 |
| Example 20 | 4.5 | 420 | 22 | 39.7 |
| Example 21 | 12.0 | 200 | 28 | 28.2 |

The acetyl-substitution degrees at 2-, 3- and 6-posiitons in cellulose acetate can be determined by means of 13C-NMR after propionylating the cellulose acetate. The method for the measurement is described in Tezuka, et al. (Carhydr. Res., 273(1995), 83-91).

The cellulose acetate synthesized in each of Examples 17 to 21 had the substitution degree of 2.82, the viscosity average polymerization degree of 320, the water content of 0.4 wt.%, the viscosity of 305 mPa·s if in the form of 6 wt.% methylene chloride solution, and the means flake size of 1.5 mm and the standard deviation is 0.5 mm if in the form of powder. Further, each cellulose acetate contained 0.01 wt.% or less of the remaining acetic acid, 0.05 wt.% or less of Ca, 0.007 wt.% or less of Mg, and 5 ppm or less of Fe. In each cellulose acetate, the extract with acetone was 11 wt.%. The ratio between weight and number average molecular weights of each cellulose acetate was 0.5.

Furthermore, each cellulose acetate was controlled to contain reused cellulose acetate in the amount of 30 wt.%.

The following components were placed in a mixing tank, heated and stirred to dissolve, to prepare a cellulose acetate solution.

| Cellulose acetate solution | |
|---|---|
| Cellulose acetate | 20 weight parts |
| Methyl acetate | 58 weight parts |
| Acetone | 5 weight parts |
| Methanol | 5 weight parts |
| Ethanol | 5 weight parts |
| Butanol | 5 weight parts |
| Triphenyl phosphate (plasticizer) | 1.2 weight parts |
| Ditrimethylolpropane tetracetate (plasticizer) | 1.2 weight parts |
| 2,4-Bis-(n-octylthio)-6-(4-hydroxy-3,5-di-tert-butylanilino)-1,3,5-triazine (UV absorber) | 0.2 weight part |
| 2-(2'-Hydroxy-3',5'-di-tert-butylphenyl)-5-chlorobenzotriazole (UV absorber) | 0.2 weight part |
| 2-(2'-Hydroxy-3',5'-di-tert-amylphenyl)-5-chlorobenzotriazole (UV absorber) | 0.2 weight part |
| $C_{12}H_{25}OCH_2CH_2O-P(=O)-(OK)_2$ (releasing agent) | 0.02 weight part |
| Citric acid (releasing agent) | 0.02 weight part |
| Silica (particle size: 20 nm, Mohs hardness number: 7) | 0.05 weight part |

The prepared cellulose acetate solution and the retardation-increasing agent solution prepared in Example 7 were mixed and stirred well to prepare a dope. The prepared dope contained the retardation-increasing agent in the amount of 3.5 weight parts based on 100 weight parts of cellulose acetate.

(Preparation of cellulose acetate film)

The dope was cast on a band by means of a band-casting machine, and the formed film was stretched under the conditions shown in Table 1 in Example 1, to prepare a cellulose acetate film (thickness: 80 µm).

The prepared film was evaluated in the same manner as in Example 1. The results are set forth in Table 11.

As indicated in Table 11, the larger substitution the cellulose acetate had degree at 6-position, the longer breaking extension point the film had and hence the less the haze increased even if it was whitened by stretching.

TABLE 11

| | Substitution degree at 6-position | Breaking point | | Slow axis | |
|---|---|---|---|---|---|
| | | Stress (kg/ $mm^2$) | Extension (%) | Standard deviation | Fluctuation range |
| Example 17 | 30.5% | 17 | 29 | 0.5° | 0.8% |
| Example 18 | 32.2% | 18 | 30 | 0.5° | 0.8% |
| Example 19 | 35.3% | 20 | 34 | 0.5° | 0.8% |
| Example 20 | 39.7% | 22 | 37 | 0.5° | 0.8% |
| Example 21 | 28.2% | 16 | 15 | 0.5° | 0.8% |

TABLE 11 (continued)

| | Substitution degree at 6-position | Re | | Rth | | Shrink starting temperature | Haze |
|---|---|---|---|---|---|---|---|
| | | Average (nm) | Fluctuation range | Average (nm) | Fluctuation range | | |
| Ex. 17 | 30.5% | 25 | 3% | 110 | 5% | 150°C | 0.5% |
| Ex. 18 | 32.2% | 25 | 3% | 110 | 5% | 150°C | 0.4% |
| Ex. 19 | 35.3% | 25 | 3% | 110 | 5% | 150°C | 0.3% |
| Ex. 20 | 39.7% | 25 | 3% | 110 | 5% | 150°C | 0.2% |
| Ex. 21 | 28.2% | 25 | 3% | 110 | 5% | 150°C | 0.8% |

(Preparation of polarizing plate)

One surface of each prepared cellulose acetate film was coated with 1.5 N isopropyl alcohol solution of KOH in the amount of 25 ml/$m^2$, and dried at 25°C for 5 seconds. The film was then washed with flowing water for 10 seconds, and blown with air at 25°C to dry.
Each thus saponified film in the length of 3,000 m was wound up around a core (diameter: 30 cm) with the tension of 20 kg/m, and stored at 30°C for 1 month.
Independently, each cellulose acetate film was immersed in 1.5 N aqueous NaOH solution at 50°C for 3 minutes. The film was then washed with water, neutralized and dried. Thus, the surface of the cellulose acetate film was saponified.
Each film thus saponified by immersing in the length of 3,000 m was wound up around a core (diameter: 30 cm) with the tension of 20 kg/m, and stored at 30°C for 1 month.
With respect to each saponified film, the length of blocking was measured. The results are set forth in Table 12.

TABLE 12

| | Substitution degree at 6-position | Blocking length of polarizing membrane | |
|---|---|---|---|
| | | Coating method | Immersing method |
| Example 17 | 30.5% | 0 m | 300 nm |
| Example 18 | 32.2% | 0 m | 400 nm |
| Example 19 | 35.3% | 0 m | 500 nm |
| Example 20 | 39.7% | 0 m | 600 nm |
| Example 21 | 28.2% | 0 m | 200 nm |

(Preparation of liquid crystal display)

The procedure of Example 15 was repeated except for using each above-prepared cellulose acetate film in place of TAC-9, to produce liquid crystal displays.

### Claims

1. An optical compensatory sheet comprising a transparent support and an optically anisotropic layer made from discotic liquid crystal molecules, wherein the transparent support comprises a polymer film in which retardation values Re and Rth defined by the following formulas (I) and (II) are in the ranges of 10 to 70 nm and 70 to 400 nm, respectively, and in which the standard deviation of angle of slow axis is 1.5° or less:

   (I) $Re = (nx-ny) \times d$
   (II) $Rth = \{(nx+ny)/2-nz\} \times d$

   in which nx is a refractive index along the slow axis in the film plane, ny is a refractive index along the fast axis in the film plane, nz is a refractive index along the depth of film, and d is the thickness of film in terms of nm.

2. The optical compensatory sheet as defined in claim 1, wherein the transparent support comprises a polymer film stretched by 3 to 100% laterally in the form of roll.

3. The optical compensatory sheet as defined in claim 2, wherein the slow axis of the polymer film has an average angle in the film plane in the range of not more than 3° to the stretching direction.

4. The optical compensatory sheet as defined in claim 3, wherein the angle of slow axis is within a fluctuation range of 5° or less.

5. The optical compensatory sheet as defined in claim 1, wherein the transparent support is a polymer film stretched by 3 to 100% longitudinally in the form of roll.

6. The optical compensatory sheet as defined in claim 5, wherein the slow axis of the polymer film has an average angle in the film plane in the range of not more than 3° to the stretching direction.

7. The optical compensatory sheet as defined in claim 6, wherein the angle of slow axis is within a fluctuation range of 5° or less.

8. The optical compensatory sheet as defined in claim 1, wherein the transparent support comprises a polymer film having a shrink-starting temperature of 130 to 190°C.

9. The optical compensatory sheet as defined in claim 1, wherein the transparent support comprises a polymer film having a breaking extension point of 10 to 30%.

10. The optical compensatory sheet as defined in claim 1, wherein the transparent support comprises a polymer film having a breaking stress point of 11 to 20 $kg/mm^2$.

11. The optical compensatory sheet as defined in claim 1, wherein the transparent support comprises a polymer film having an Re retardation value within a fluctuation range of 0 to 10%.

12. The optical compensatory sheet as defined in claim 1, wherein the transparent support comprises a polymer film having an Rth retardation value within a fluctuation range of 0 to 10%.

13. The optical compensatory sheet as defined in claim 1, wherein the polymer film is made of cellulose acetate.

14. The optical compensatory sheet as defined in claim 13, wherein the cellulose acetate has an acetic acid content of 59.0 to 61.5%.

15. The optical compensatory sheet as defined in claim 13, wherein the substitution degree at 6-position of the cellulose acetate is larger than each of those at 2- and 3-positions.

16. The optical compensatory sheet as defined in claim 13, wherein the polymer film is produced according to a solvent cast method in which a solvent containing an ether having 2 to 12 carbon atoms, a ketone having 3 to 12 carbon atoms or an ester having 2 to 12 carbon atoms is used.

17. The optical compensatory sheet as defined in claim 13, wherein the polymer film is a cellulose acetate film formed according to a cooperatively casting method.

18. The optical compensatory sheet as defined in claim 13, wherein the polymer film contains not only the cellulose acetate but also an aromatic compound having at least two aromatic rings.

19. The optical compensatory sheet as defined in claim 18, wherein the polymer film contains 100 weight parts of the cellulose acetate and 0.01 to 20 weight parts of the aromatic compound having at least two aromatic rings.

20. The optical compensatory sheet as defined in claim 18, wherein the aromatic compound has at least one 1,3,5-triazine ring.

21. The optical compensatory sheet as defined in claim 13, wherein the cellulose acetate film has at least one surface saponified by applying an alkaline solution.

22. The optical compensatory sheet as defined in claim 1, wherein the average of directions obtained by projecting normal lines of discotic planes of the discotic liquid crystal molecules to the transparent support plane is essentially at 45° to the average direction of slow axis in the support plane.

23. A polarizing plate comprising two transparent protective films and a polarizing membrane provided between them, wherein at least one of the protective films is the optical compensatory sheet as defined in claim 1, said optical compensatory sheet being placed so that the average direction of slow axis in the transparent support of the sheet may be positioned at an angle of -3° to 3° to the transmission axis of the polarizing membrane.

24. An elliptically polarizing plate comprising an optically anisotropic layer made from discotic liquid crystal molecules, a transparent support, a polarizing membrane and a transparent protective film piled up in this order, or otherwise comprising a transparent support, an optically anisotropic layer made from discotic liquid crystal molecules, a polarizing membrane and a transparent protective film piled up in this order; wherein the transparent support

comprises a polymer film in which retardation values Re and Rth defined by the following formulas (I) and (II) are in the ranges of 10 to 70 nm and 70 to 400 nm, respectively, and in which the standard deviation of angle of slow axis is 1.5° or less; said slow axis in the support being placed at an average angle of -3° to 3° to the transmission axis of the polarizing membrane:

(I) Re = (nx-ny) × d
(II) Rth = {(nx+ny)/2-nz} × d

in which nx is a refractive index along the slow axis in the film plane, ny is a refractive index along the fast axis in the film plane, nz is a refractive index along the depth of film, and d is the thickness of film in terms of nm.

**25.** A liquid crystal display comprising two polarizing plates and a liquid crystal cell of bend aligning mode provided between the plates; wherein at least one of the plates is an elliptically polarizing plate comprising an optically anisotropic layer made from discotic liquid crystal molecules, a transparent support, a polarizing membrane and a transparent protective film piled up in this order, or otherwise comprising a transparent support, an optically anisotropic layer made from discotic liquid crystal molecules, a polarizing membrane and a transparent protective film piled up in this order; said transparent support comprising a polymer film in which retardation values Re and Rth defined by the following formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane:

(I) Re = (nx-ny) × d
(II) Rth = {(nx+ny)/2-nz} × d

in which nx is a refractive index along the slow axis in the film plane, ny is a refractive index along the fast axis in the film plane, nz is a refractive index along the depth of film, and d is the thickness of film in terms of nm.

**26.** An elliptically polarizing plate comprising an optically anisotropic layer made from discotic liquid crystal molecules, a transparent support, a transparent protective film, a polarizing membrane and another transparent protective film piled up in this order, or otherwise comprising a transparent support, an optically anisotropic layer made from discotic liquid crystal molecules, a transparent protective film, a polarizing membrane and another transparent protective film piled up in this order; wherein the transparent support comprises a polymer film in which retardation values Re and Rth defined by the following formulas (I) and (II) are in the ranges of 10 to 70 nm and 70 to 400 nm, respectively, and in which the standard deviation of angle of slow axis is 1.5° or less; said slow axis in the support being placed at an average angle of -3° to 3° to the transmission axis of the polarizing membrane:

(I) Re = (nx-ny) × d
(II) Rth = {(nx+ny)/2-nz} × d

in which nx is a refractive index along the slow axis in the film plane, ny is a refractive index along the fast axis in the film plane, nz is a refractive index along the depth of film, and d is the thickness of film in terms of nm.

**27.** The elliptically polarizing plate as defined in claim 26, wherein the transparent protective film placed between the transparent support and the polarizing membrane comprises a polymer film in which retardation values Re and Rth defined by the following formulas (I) and (II) are in the ranges of 10 to 70 nm and 70 to 400 nm, respectively, and in which the standard deviation of angle of slow axis is 1.5° or less, said slow axis in the protective film being placed at an average angle of -3° to 3° to the transmission axis of the polarizing membrane:

(I) Re = (nx-ny) × d
(II) Rth = {(nx+ny)/2-nz} × d

in which nx is a refractive index along the slow axis in the film plane, ny is a refractive index along the fast axis in the film plane, nz is a refractive index along the depth of film, and d is the thickness of film in terms of nm.

**28.** A liquid crystal display comprising two polarizing plates and a liquid crystal cell of bend aligning mode provided between the plates; wherein at least one of the plates comprises an elliptically polarizing plate comprising an optically anisotropic layer made from discotic liquid crystal molecules, a transparent support, a transparent protective film, a polarizing membrane and another transparent protective film piled up in this order, or otherwise

comprising a transparent support, an optically anisotropic layer made from discotic liquid crystal molecules, a transparent protective film, a polarizing membrane and another transparent protective film piled up in this order; each of said transparent support and said transparent protective film placed between the transparent support and the polarizing membrane comprising a polymer film in which retardation values Re and Rth defined by the following formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane:

(I) $Re = (nx-ny) \times d$
(II) $Rth = \{(nx+ny)/2-nz\} \times d$

in which nx is a refractive index along the slow axis in the film plane, ny is a refractive index along the fast axis in the film plane, nz is a refractive index along the depth of film, and d is the thickness of film in terms of nm.

**29.** The liquid crystal display as defined in claim 28, wherein the transparent support and the transparent protective film are the same polymer films.

**30.** A liquid crystal display comprising two polarizing plates and a liquid crystal cell of bend aligning mode provided between the plates; wherein a transparent protective film and an optical compensatory sheet comprising a transparent support and an optically anisotropic layer made from discotic liquid crystal molecules are provided between the liquid crystal cell and at least one polarizing plate, each of said transparent protective film and said transparent support comprising a polymer film in which retardation values Re and Rth defined by the following formulas (I) and (II) are in the ranges of 10 to 70 nm and 70 to 400 nm, respectively, and in which the standard deviation of angle of slow axis is 1.5° or less; and said slow axis in the support being placed at an average angle of -3° to 3° to the transmission axis of the polarizing membrane:

(I) $Re = (nx-ny) \times d$
(II) $Rth = \{(nx+ny)/2-nz\} \times d$

in which nx is a refractive index along the slow axis in the film plane, ny is a refractive index along the fast axis in the film plane, nz is a refractive index along the depth of film, and d is the thickness of film in terms of nm.

**31.** The liquid crystal display as defined in claim 30, wherein the transparent support and the transparent protective film are the same polymer films.

FIG. 1

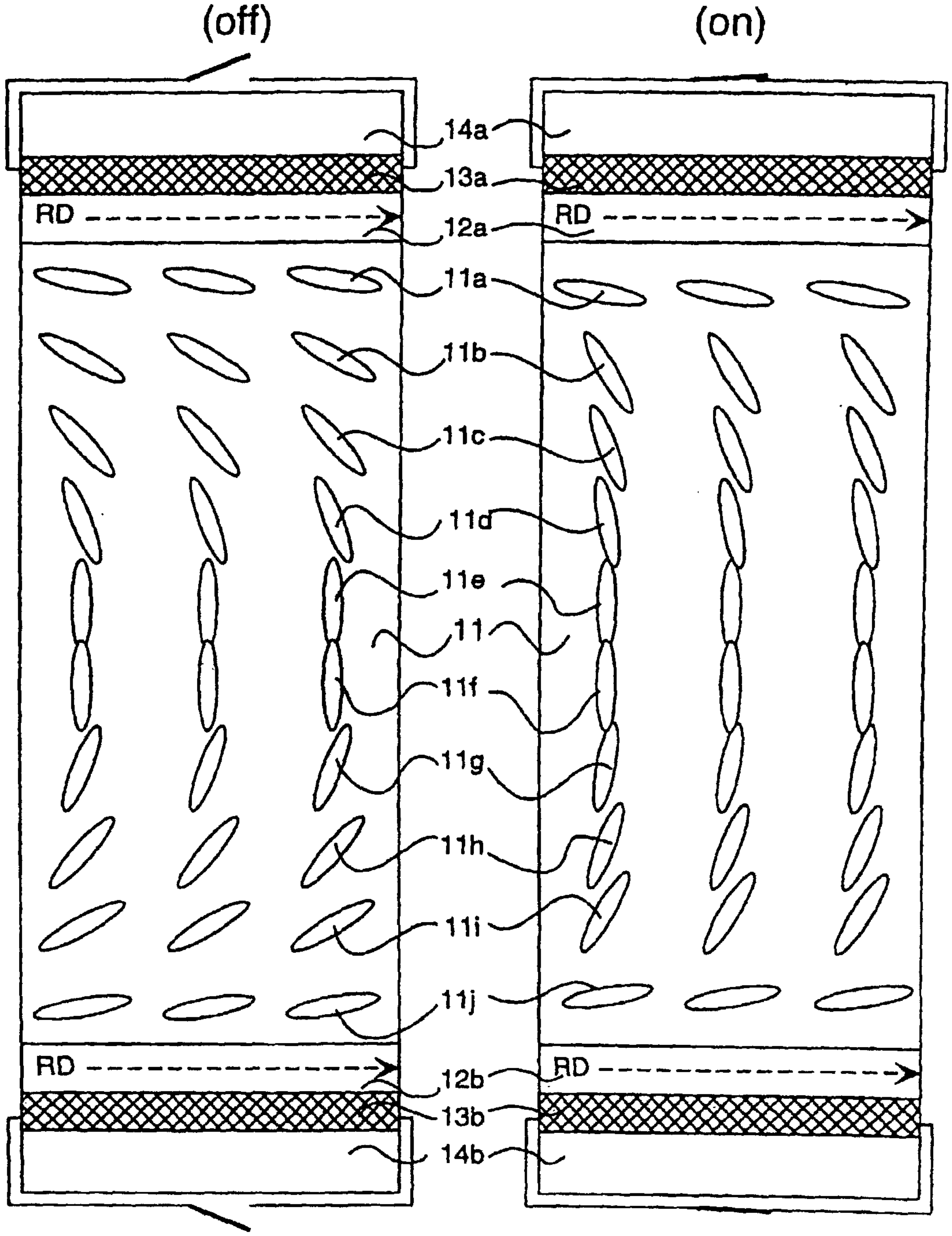
(off)
(on)
14a
13a
RD
12a
11a
11b
11c
11d
11e
11
11f
11g
11h
11i
11j
12b
13b
14b

FIG. 2

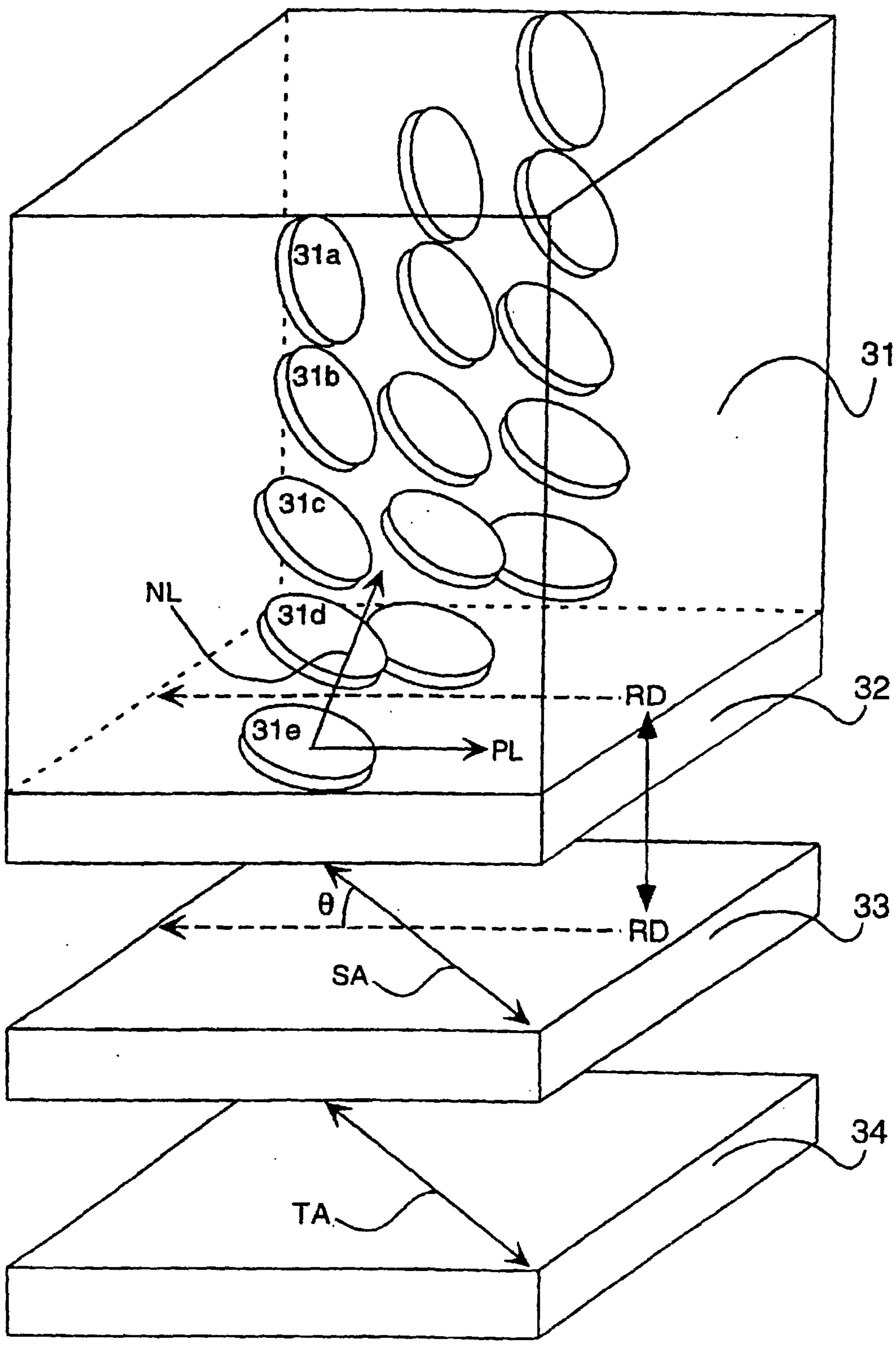

FIG. 3

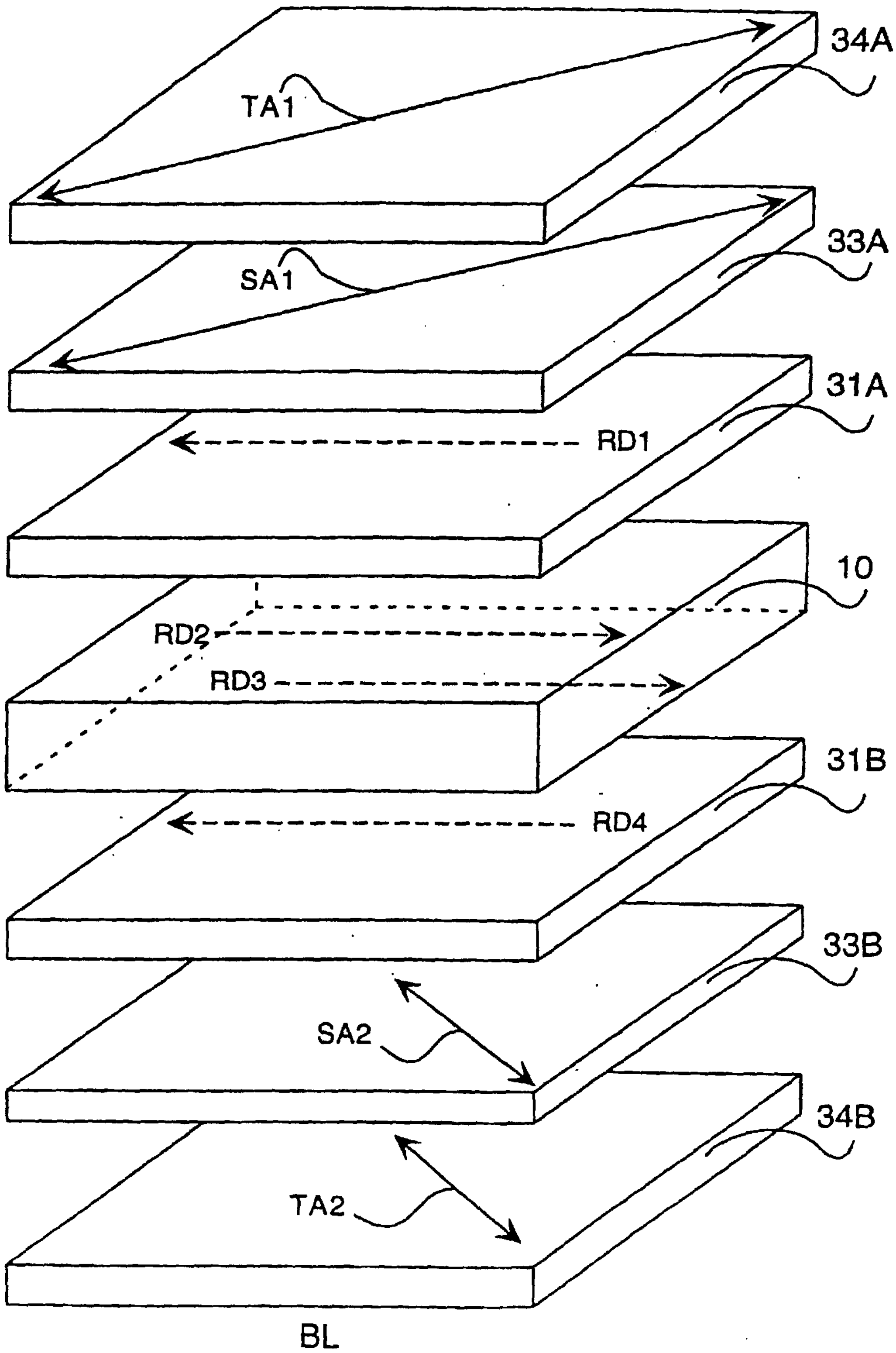

FIG. 4

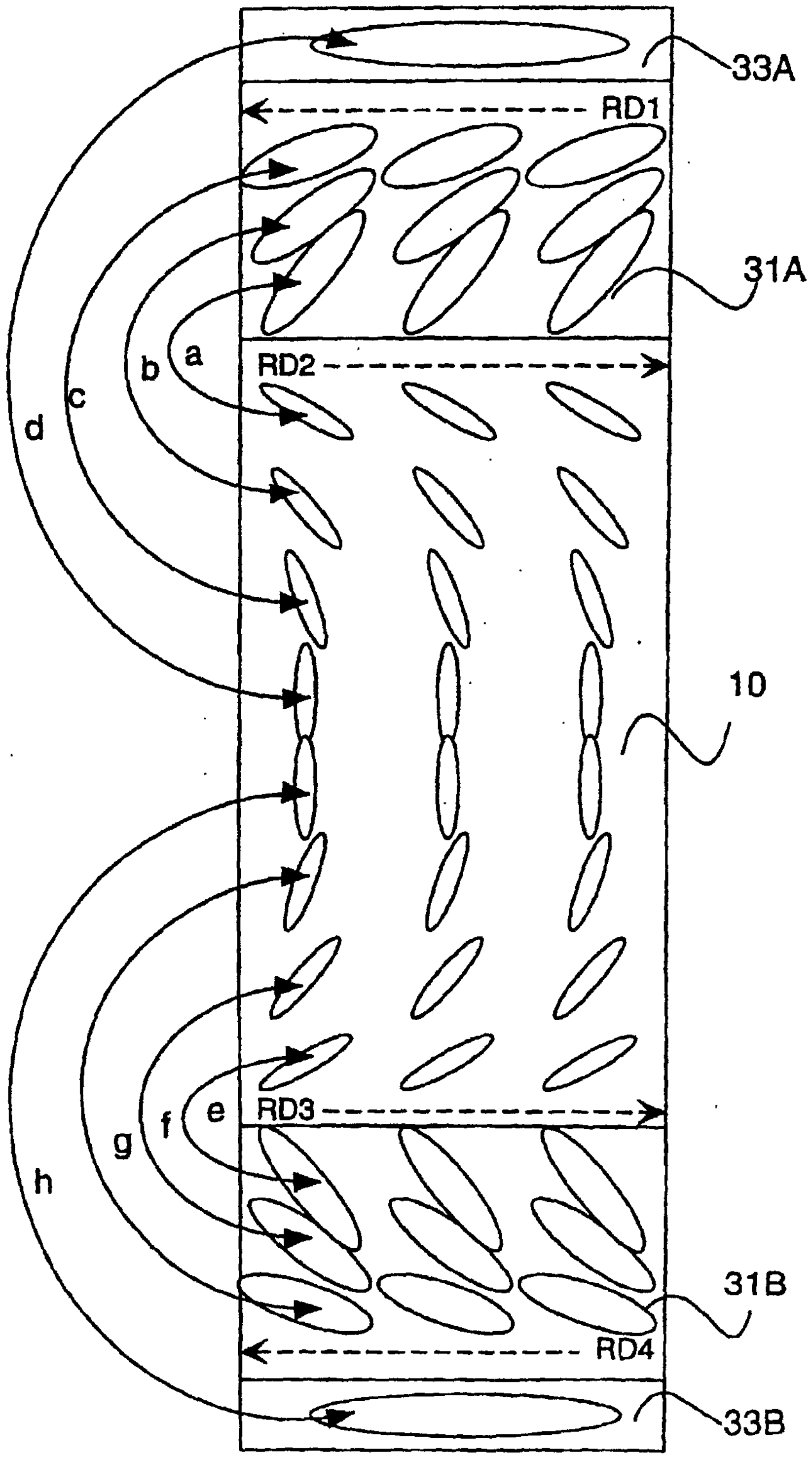

**INTERNATIONAL SEARCH REPORT**

International application No.
PCT/JP01/10585

A. CLASSIFICATION OF SUBJECT MATTER
Int.Cl$^7$ G02B5/30, G02F1/13363, C08J5/18 // C08L101:00, C08L1:12

According to International Patent Classification (IPC) or to both national classification and IPC

B. FIELDS SEARCHED

Minimum documentation searched (classification system followed by classification symbols)
Int.Cl$^7$ G02B5/30, G02F1/13363, C08J5/18 // C08L101:00, C08L1:12

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| EY | JP 2002-22943 A (Fuji Photo Film Co., Ltd.), 23 January, 2002 (23.01.2002), Full text; all drawings (Family: none) | 1-31 |
| Y | EP 774683 A2 (Fuji Photo Film Co., Ltd.), 21 May, 1997 (21.05.1997), Full text; all drawings & JP 9-211444 A Full text; all drawings & US 5805253 A | 1-31 |
| Y | JP 9-222600 A (Fuji Photo Film Co., Ltd.), 26 August, 1997 (26.08.1997), Full text; all drawings (Family: none) | 1-31 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 February, 2002 (13.02.02) | 05 March, 2002 (05.03.02) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP01/10585

C (Continuation). DOCUMENTS CONSIDERED TO BE RELEVANT

| Category* | Citation of document, with indication, where appropriate, of the relevant passages | Relevant to claim No. |
|---|---|---|
| Y | EP 926533 A2 (Fuji Photo Film Co., Ltd.), 30 June, 1999 (30.06.1999), Full text; all drawings & JP 11-316378 A Full text; all drawings & US 6064457 A & DE 69801480 E | 1-31 |
| Y | JP 2000-111914 A (Fuji Photo Film Co., Ltd.), 21 April, 2000 (21.04.2000), Full text; all drawings (Family: none) | 1-31 |
| Y | JP 2000-154261 A (Fuji Photo Film Co., Ltd.), 06 June, 2000 (06.06.2000), Full text; all drawings (Family: none) | 1-31 |
| Y | JP 2000-275434 A (Fuji Photo Film Co., Ltd.), 06 October, 2000 (06.10.2000), Full text; all drawings (Family: none) | 1-31 |
| Y | JP 2000-304931 A (Fuji Photo Film Co., Ltd.), 02 November, 2000 (02.11.2000), Full text; all drawings & WO 00/49430 A1 & EP 1156349 A1 | 1-31 |
| PY | JP 2001-100039 A (Fuji Photo Film Co., Ltd.), 13 April, 2001 (13.04.2001), Full text; all drawings (Family: none) | 1-31 |
| EY | JP 2001-356214 A (Konica Corporation), 26 December, 2001 (26.12.2001), Full text (Family: none) | 1-31 |
| Y | JP 9-146085 A (Sekisui Chemical Co., Ltd.), 06 June, 1997 (06.06.1997), Full text; all drawings; especially, page 3, Par. No. [0023] (Family: none) | 1-7,11-12, 23-31 |
| Y | JP 11-77822 A (Fuji Photo Film Co., Ltd.), 23 March, 1999 (23.03.1999), Full text (Family: none) | 1-7,11-12, 23-30 |
| Y | JP 7-98411 A (Fuji Photo Film Co., Ltd.), 11 April, 1995 (11.04.1995), Full text; all drawings (Family: none) | 1-7,11-12, 23-30 |
| Y | JP 11-326636 A (Sekisui Chemical Co., Ltd.), 26 November, 1999 (26.11.1999), Full text; all drawings (Family: none) | 1-7,11-12, 23-30 |

Form PCT/ISA/210 (continuation of second sheet) (July 1992)

**INTERNATIONAL SEARCH REPORT**

International application No.
PCT/JP01/10585

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-138307 A (Sekisui Chemical Co., Ltd.), 27 May, 1997 (27.05.1997), Full text; all drawings (Family: none) | 1-7,11-12, 23-30 |
| Y | JP 11-167025 A (Sekisui Chemical Co., Ltd.), 22 June, 1999 (22.06.1999), Full text; all drawings (Family: none) | 1-7,11-12, 23-30 |

Form PCT/ISA/210 (continuation of second sheet) (July 1992)